# EUROPEAN PATENT SPECIFICATION

(11) **EP 4 022 809 B1**
(45) Date of publication and mention of the grant of the patent: **13.05.2026**
(21) Application number: 20760873.8
(22) Date of filing: 27.08.2020
(51) Int. Cl.: H04L 1/16, H04L 1/18

(54) **ENHANCEMENTS FOR CBG-BASED HARQ FEEDBACK AND OVERHEAD REDUCTION IN NEW RADIO**
VERBESSERUNGEN FÜR CBG-BASIERTES HARQ-FEEDBACK UND REDUZIERUNG DES OVERHEADS IN EINEM NEUEN FUNKGERÄT
AMÉLIORATIONS DE RETOUR HARQ BASÉ SUR CBG ET RÉDUCTION DE SURDÉBIT EN NEW RADIO

(30) Priority: 30.08.2019 EP 19194755
(43) Date of publication of application: 06.07.2022
(73) Proprietor: Fraunhofer-Gesellschaft zur Förderung der angewandten Forschung e.V., 80686 München (DE)
(72) Inventor: FEHRENBACH, Thomas, 10587 Berlin (DE); GÖKTEPE, Baris, 10587 Berlin (DE); HELLGE, Cornelius, 10587 Berlin (DE); WIRTH, Thomas, 10587 Berlin (DE); SCHIERL, Thomas, 10587 Berlin (DE); HASSAN HUSSEIN, Khaled Shawky, 91058 Erlangen (DE); LEYH, Martin, 91058 Erlangen (DE); HEYN, Thomas, 91058 Erlangen (DE); NIEMANN, Bernhard, 91058 Erlangen (DE); POPP, Julian, 91058 Erlangen (DE); SRINIVASAN, Nithin, 10587 Berlin (DE)
(74) Representative: Zimmermann, Tankred Klaus
(86) International application number: PCT/EP2020/074010
(87) International publication number: WO 2021/038001

(56) References cited:
- WO-A1-2019/122000
- WO-A2-2018/129017

## Description

The present application relates to the field of wireless communication systems or networks, more specifically to enhancements in the communication among network entities of the communication network when performing a communication using a plurality of frequency bands, some or all of which may include frequency bands in the unlicensed spectrum. Embodiments of the present invention concern enhancements in the feedback mechanism for reporting successful/non-successful transmissions of data or no need for redundancy for the data or a need for some redundancy for the data or an amount of additional redundancy needed for the data in a multi-band operation, for example, improvements for the hybrid automatic repeat request, HARQ, feedback.

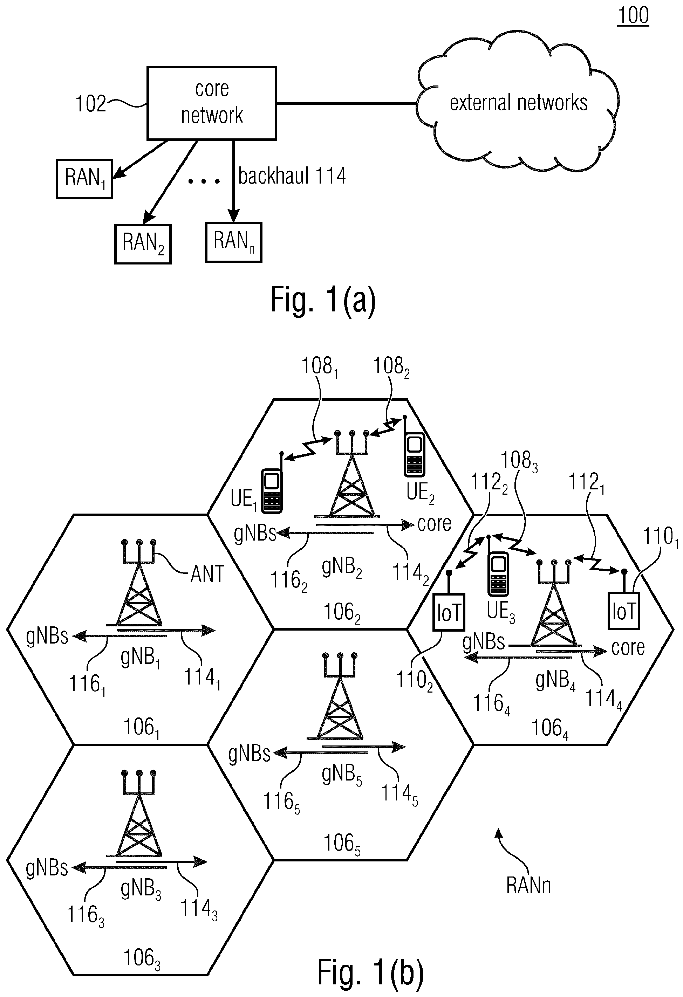

Fig. 1 is a schematic representation of an example of a terrestrial wireless network 100 including, as is shown in Fig. 1(a), a core network 102 and one or more radio access networks RAN₁, RAN₂, ... RAN_{N}. Fig. 1(b) is a schematic representation of an example of a radio access network RANₙ that may include one or more base stations gNB₁ to gNB₅, each serving a specific area surrounding the base station schematically represented by respective cells 106₁ to 106₅. The base stations are provided to serve users within a cell. The one or more base stations may serve users in licensed and/or unlicensed bands. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RANₙ may include more or less such cells, and RANₙ may also include only one base station. Fig. 1(b) shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. This may be realized on licensed bands or on unlicensed bands. Further, Fig. 1(b) shows two IoT devices 110₁ and 110₂ in cell 106₄, which may be stationary or mobile devices. The loT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂. The respective base station gNB₁ to gNB₅ may be connected to the core network 102, e.g. via the S1 interface, via respective backhaul links 114₁ to 114₅, which are schematically represented in Fig. 1(b) by the arrows pointing to "core". The core network 102 may be connected to one or more external networks. Further, some or all of the respective base station gNB₁ to gNB₅ may connected, e.g. via the S1 or X2 interface or the XN interface in NR, with each other via respective backhaul links 116₁ to 116₅, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB) and a system information block (SIB), the physical downlink, uplink and sidelink control channels (PDCCH, PUCCH, PSSCH) carrying for example the downlink control information (DCI), the uplink control information (UCI) and the sidelink control information (SCI). For the uplink, the physical channels may further include the physical random access channel (PRACH or RACH) used by UEs for accessing the network once a UE synchronized and obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g. 1ms. Each subframe may include one or more slots of 12 or 14 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard, or the 5G or NR, New Radio, standard, or the NU-U, New Radio Unlicensed, standard.

The wireless network or communication system depicted in Fig. 1 may by a heterogeneous network having distinct overlaid networks, e.g., a network of macro cells with each macro cell including a macro base station, like base station gNB₁ to gNB₅, and a network of small cell base stations (not shown in Fig. 1), like femto or pico base stations.

In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the 5G or NR, new radio, standard.

WO 2018/129017 A2 describes systems, methods and instrumentalities for receiver feedback in wireless systems. Receiver feedback format, content, type and/or timing may be determined as a function of, for example, at least one of a type of soft-combining processing to apply in a HARQ process, a HARQ operating point for the HARQ process, one or more reference transmissions for controlling a type of HARQ feedback for the HARQ process, and a feedback suppression parameter for one or more transmissions in a sequence associated with the HARQ process or a transport block (TB). Uniform and nonuniform CB-to-CBG mapping may be provided (e.g., by a WTRU) based on, for example, one or more parameters, interference and channel conditions and/or a probability of or actual pre-empting transmissions. A CB to CBG mapping indication may be provided, for example, in support of selecting a CB to CBG mapping from multiple CB to CBG mappings. Intra- and inter-WTRU interference/preemption indications may be provided.

WO 2019/122000 A1 describes a network node which is arranged to provide communication at least in an unlicensed band where clear channel assessment, CCA, is required before transmissions. The unlicensed band comprises a plurality of carriers, or sets of carriers, defining channels. The network node is arranged to prepare code block groups comprising code blocks from transport blocks, which transport blocks each comprises a payload intended for a respective receiver, wherein each code block comprises a checksum enabling a hybrid automatic repeat request, HARQ, procedure on a per code block group basis, map the code block groups to a wideband signal comprising a consecutive set of channels on the carriers of the unlicensed band, assess whether the channels, respectively, are clear, and transmit the code block groups mapped on the channels which are clear and omit transmissions of code block groups mapped on channels that are not clear, wherein the assessment and the transmissions are performed within a first time interval, and transmit code blocks groups omitted to be transmitted using the HARQ procedure for retransmission prior receiving a non-acknowledgement, NAK, from a respective

It is noted that the information in the above section is only for enhancing the understanding of the background of the invention and therefore it may contain information that does not form prior art that is already known to a person of ordinary skill in the art.

Starting from a prior art as described above, it is an object of the present invention to provide an improved feedback mechanism for a wireless communication among entities of wireless communication networks using multiple frequency bands.

This object is achieved by an apparatus according to claim 1, and by a method according to claim 14.

Embodiments of the present invention are now described in further detail with reference to the accompanying drawings:
- Fig. 1: shows a schematic representation of an example of a wireless communication system;
- Fig. 2: illustrates an example of a TB confining the CBGs to the respective subbands and illustrates schematically the time/frequency resources to be used for a transmission from the transmitter to the receiver using four subbands and multiple CBGs per subband;
- Fig. 3: is a schematic representation of a wireless communication system including a transmitter, like a base station, and one or more receivers, like user devices, UEs;
- Fig. 4: illustrates an example of a TB confining the CBGs to the respective subbands and illustrates schematically the time/frequency resources to be used for a transmission from the transmitter to the receiver using three subbands and one CBGs per subband;
- Fig. 5: illustrates an embodiment of the present invention applying a lossy compression on the basis of a subband based feedback;
- Fig. 6: illustrates another embodiment of the present invention illustrating a failed subband;
- Fig. 7: illustrates an example for a transmitter initiated COT including multiple subbands and employing an early feedback; and
- Fig. 8: illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned.

In mobile communication systems or networks, like those described above with reference to Fig. 1, for example in a LTE or 5G/NR network, the respective entities may communicate using one of more frequency bands. A frequency band includes a start frequency, an end frequency and all intermediate frequencies between the start and end frequencies. In other words, the start, end and intermediate frequencies may define a certain bandwidth, e.g., 20MHz. A frequency band may also be referred to as a carrier, a bandwidth part, BWP, a subband, and the like.

When using a single frequency band, the communication may be referred to as a single-band operation, e.g., a UE transmits/receives radio signals to/from another network entity on frequencies being within the 20MHz band.

When using a two or more frequency bands, the communication may be referred to as a multi-band operation or as a wideband operation or as a carrier aggregation operation. The frequency bands may have different bandwidths or the same bandwidth, like 20MHz. For example, in case of frequency bands having the same bandwidths a UE may transmit/receive radio signals to/from another network entity on frequencies being within two or more of the 20MHz bands so that the frequency range for the radio communication may be a multiple of 20MHz. The two or more frequency bands may be continuous/adjacent frequency bands or some or all for the frequency bands may be separated in the frequency domain.

The multi-band operation may include frequency bands in the licensed spectrum, or frequency bands in the unlicensed spectrum, or frequency bands both in the licensed spectrum and in the unlicensed spectrum.

Carrier aggregation, CA, is an example using two or more frequency bands in the licensed spectrum and/or in the unlicensed spectrum.

5G New Radio (NR) may support an operation in the unlicensed spectrum so that a multi-band operation may include frequency bands in the unlicensed spectrum bands. This may be referred to as NR-based access to unlicensed spectrum, NR-U, and the frequency bands may be referred to as subbands. The unlicensed spectrum may include bands with a potential IEEE 802.11 coexistence, such as the 5GHz and the 6GHz bands. NR-U may support bandwidths that are an integer multiple of 20 MHz, for example due to regulatory requirements. The splitting into the subbands is performed so as to minimize interference with coexisting systems, like IEE 802.11 systems, which may operate in one or more of the same bands with the same nominal bandwidth channels, like 20 MHz channels. Other examples of coexisting systems may use subbands having subband sizes and nominal frequencies different from the above-described IEEE 802.11 systems. For example, the unlicensed spectrum may include the 5GHz band, the 6GHz band, the 24GHz band or the 60GHz band. Examples of such unlicensed bands include the industrial, scientific and medical, ISM, radio bands reserved internationally for the use of radio frequency energy for industrial, scientific and medical purposes other than telecommunications.

During an operation using unlicensed subbands a channel access procedure is to be performed separately per subband, e.g., Listen-before-talk, LBT, or a request to send/clear to send mechanism, RTS/CTS mechanism. This may lead to a situation in which one or more of the subbands are busy or occupied due to an interference, for example, from other communication systems coexisting on the same band, like other public land mobile networks, PLMNs or systems operating in accordance with the IEEE 802.11 specification. In such a situation, the transmitter, either the transmitting gNB or the transmitting UE, is only allowed to transmit on the subbands which are detected to be not busy, also referred to as subbands being free or non-occupied, as is determined by the LBT algorithm. For example for a transmission spanning more than 20MHz in the 5GHz operational unlicensed band, the transmitter, like the gNB or the UE, performs Listen-Before-Talk, LBT, separately on each subband. Once the LBT results are available for each subband, the devices, for example, the gNB in the downlink, DL, or the UE in the uplink, UL, are allowed to transmit on those subbands which are determined to be free or unoccupied, i.e., to transmit on the won subband(s). No transmission is allowed on the occupied, busy or non-won subbands.

For example, the 5G New Radio (NR) technology supports operation in unlicensed bands through a technology referred to as NR-based access to unlicensed spectrum (NR-U). The unlicensed spectrum may include bands, e.g., with potential IEEE 802.11 coexistence, such as the 5 GHz and the 6 GHz bands. NR-U may support bandwidths that are an integer multiple of 20 MHz, for example due to regulatory requirements. Each of the 20 MHz bandwidth channels is designed as a subband, and the splitting into the subbands is performed so as to minimize interference with coexisting systems, like IEE 802.11 systems, which may operate in one or more of the same bands with the same nominal bandwidth channels, like 20 MHz channels. Other examples, of coexisting systems may use subbands having subband sizes and nominal frequencies different from the above-described IEEE 802.11 systems. For example, unlicensed subbands may be used, for example, the 24 GHz band or the 60 GHz band. Examples of such unlicensed subbands include the industrial, scientific and medical, ISM, radio bands reserved internationally for the use of radio frequency energy for industrial, scientific and medical purposes other than telecommunications.

In general, during a wideband operation using unlicensed subbands, for example a transmission spanning more than 20 MHz in the 5 GHz operational unlicensed band, the transmitter, like the gNB or the UE perform LBT separately on each subband, and once the LBT results are available for each subband, the devices, for example, the gNB in the downlink, DL, or the UE in the uplink, UL, are allowed to only transmit on those subbands which are determined to be free or unoccupied, i.e., to transmit on the won subband. For example, in the 5 GHz unlicensed band, the number of 20 MHz subbands used for a wideband operation may be four, so that the overall bandwidth is 80 MHz, however, the number of actually used subbands may differ.

When considering, for example, a NR unlicensed operation, NR-U, i.e., a multi-band communication using frequency bands or subbands in the unlicensed spectrum, a UE or a gNB may perform LBT to capture the channel for the channel occupancy time, COT. A COT may also be shared with other devices, for example, a UE may share a gNB initiated COT, and the UE may use the gNB initiated COT after a so-called switching gap. In case the gap exceeds a certain duration, for example, 16 µs, the other device may perform LBT, either CAT-2 or CAT-4, dependent on the duration of the gap. In a wideband operation, a UE or a gNB are supposed to perform LBT for each and every subband, and the total amount of subbands may comprise a complete bandwidth part, BWP.

When transmitting in a multi-band or wideband operation, a transport block, TB, is sent out by a transmitter. For example in case of a communication between a base station and a user device, the transmission may be a downlink transmission from the gNB to the UE or an uplink transmission from the UE to the gNB. In case of sidelink communications, the transmitter may be a UE for transmitting the transport block to a receiving UE over the sidelink. The receiver, the UE or the gNB, receives the TB and is to decode the data. A feedback mechanism, like the HARQ mechanism is implemented. The feedback mechanism may indicate or signal to the transmitter a successful or a non-successful transmission of the data, for example by sending an acknowledgement message, ACK, or a non-acknowledgement message, NACK. The feedback mechanism may indicate or signal to the transmitter that there is no need for redundancy for the data or that there is a need for some redundancy for the data. The feedback may also indicate of signal an amount of additional redundancy needed for the data. Responsive to the feedback, the transmitter, in case of a NACK, may perform a retransmission. For example, the retransmission may contain the same information, for example the same data and the same parity bits to allow chase combining at the receiver. The retransmission may also include incremental redundancy.

The TB may be split into a plurality of code block groups, CBGs, and the retransmission mechanism is to indicate the ACK/NACK and is to retransmit the data in the unit of CBG. A CBG may include one or more code blocks, CBs. Thus, when splitting the TB into multiple CBGs, a multiple code block group based HARQ may be used. When considering a multiband operation, the CBGs are confined to a respective frequency band or subband, and one or more CBGs may share the TB duration or the slot duration in a time division multiplex, TDMed, fashion.

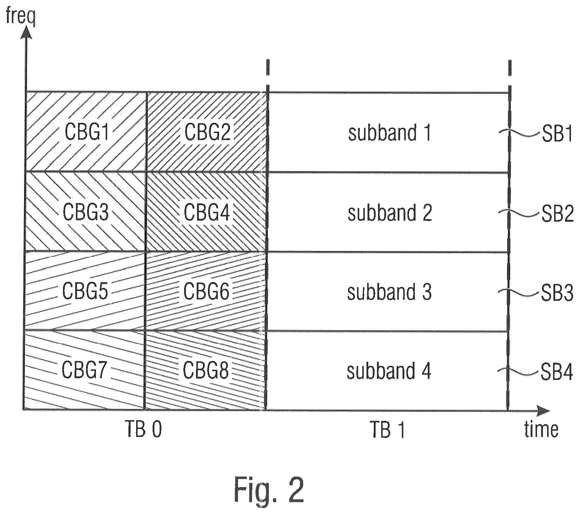

Fig. 2 illustrates an example of a TB confining the CBGs to the respective subbands and illustrates schematically the time/frequency resources to be used for a transmission from the transmitter to the receiver using four subbands SB1 to SB4, for example frequency bands in the unlicensed spectrum. When operating in the unlicensed spectrum, as mentioned above, prior to transmitting on one of the subbands, the transmitter needs to perform a clear channel assessment mechanism, CCA mechanism, which may be the above-mentioned LBT, as is schematically indicated in Fig. 2 by the CCAs associated with each of the subbands SB1 to SB4. Further two transport blocks TB0 and TB1 are illustrated, each of which may span one slot of a radio frame of the wireless communication system. It is assumed that the transport block TB0 is split into eight CBGs, namely CBG1 to CBG8. Each CBG is confined to one subband. For example, CBG1 is confined to SB1, CBG2 is confined to SB1 as well, while CBG3 is confined to SB2, and so on. The CBGs share the slot duration or TB duration of TB0 in a TDMed manner. CBG1 and CBG2, CBG3 and CBG4, CBG5 and CBG6, and CBG7 and CBG8 share the TB duration.

When considering a CBG transmission for a wideband operation in the NR unlicensed spectrum, and when considering two or more subbands, for example each having a 20 MHz bandwidth, in case of a downlink, DL, the gNB may perform a clear channel assessment, CCA, using, for example, listen before talk, LBT. This may be performed both for a load based event, LBE, or for a frame based event, FBE. Once the CCA identifies a free channel, i.e., a channel including all or some of the subbands, the gNB performs the transmission of the TB which is split into the multiple code block groups. In case the UE receives each CBG correctly, for each CBG an ACK feedback is transmitted so as to acknowledge the correct receipt to the gNB. On the other hand, in case the UE detects one or more failing CBGs, even if the LBT was successful for the gNB, the UE needs to feedback to the gNB the respective ACKs/NACKs associated with the correctly received CBGs and associated with the failed CBGs.

In case of an uplink transmission, this transmission may be inside the gNB COT or may be outside the gNB COT. In case of the uplink transmission being inside the gNB COT, the gNB may perform a clear channel assessment, CCA, using, for example, LBT, and grants are distributed to one or more UEs to perform the uplink, and the UE is requested to perform an LBT before the uplink transmission is performed in case the switch gap exceeds a certain period, like 16 µs. In case the uplink transmission is outside the gNB COT, the UE may initiate the COT by performing a CCA for the uplink considering, for example, a dynamic grants or configured grants. In case of a wideband operation as explained with reference to Fig. 2, the UE or the gNB or both the UE and the gNB may perform the subband clear channel assessments for determining the subbands available or being clear for the uplink. The UE may perform an uplink transmission of a TB that is split into the multiple code block groups, and in case the gNB receives all CBGs correctly, all CBGs are acknowledged, i.e., for each CGB an ACK feedback is sent to the UE. Otherwise, in case the gNB detects one or more failing CBGs, the gNB provides the ACK/NACK feedbacks for each of the CBGs to inform the UE which of the CBGs was correctly received and which was not correctly received.

It is noted that the above-described mechanisms regarding the downlink and uplink transmission may equally apply for sidelink communications between two network entities, like two user devices, and the transmission corresponding to the DL transmission is the transmission from the sending UE to the receiving UE, and the transmission corresponding to the UL transmission is the transmission from the receiving UE to the sending UE.

When considering the above-described scenarios of a data transmission in a multi-band operation including a feedback mechanism, one may see that the amount of feedback scales with the number of CBGs into which the TB is split. When considering Fig. 2 and the eight CBGs, for each CBG at least one bit may be used for signaling an ACK, e.g., a "1", or a NACK, e.g., "0". In other words, the ACK/NACK transmission and the retransmission of data is to be performed per CBG which, as a consequence, increases the signaling overhead for the signaling of the feedback, like the ACK/NACK from the receiver to the transmitter. Further, the feedback is provided only once the TB has been received at the receiver, so that, for certain services requiring a high reliability and low latency, the feedback may not be received within a predefined time period to allow for fulfilling certain service requirements, i.e., the transmission of the feedback may be too late, for example in case of ultra-reliable low latency communications, URLLC.

The present invention provides improvements and enhancements in the wireless communication system addressing the above described problems. The wireless communication system may use one or more subbands, also referred to as channels or frequency bands of a NR carrier, wherein a frequency band includes a start frequency, an end frequency and all intermediate frequencies between the start and end frequencies. A subband may have a predefined bandwidth, like 20 MHz. When using a plurality of subbands, the operation is also referred to as a wideband operation.

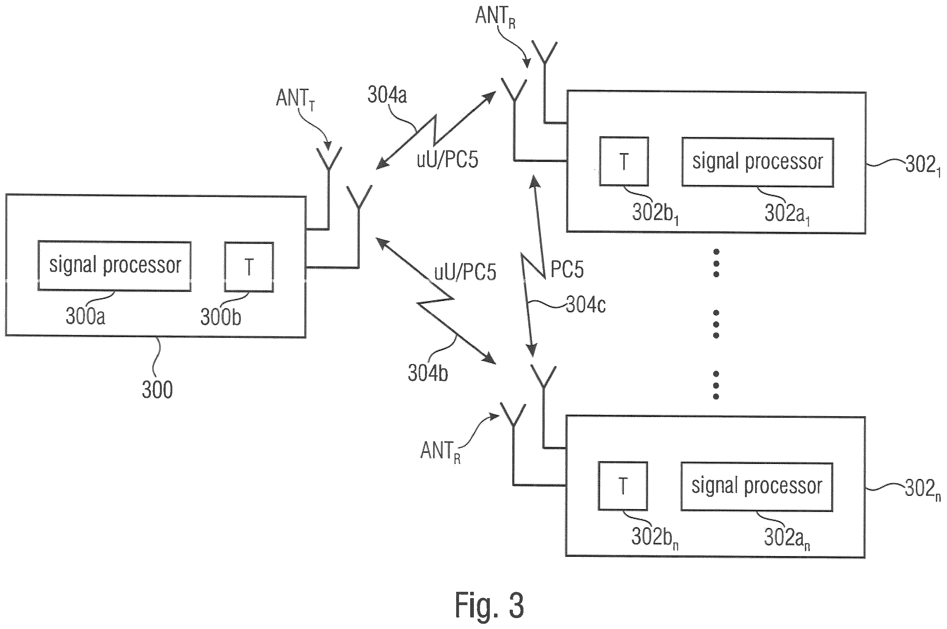

Embodiments of the present invention may be implemented in a wireless communication system as depicted in Fig. 1 including base stations and users, like mobile terminals or loT devices. Fig. 3 is a schematic representation of a wireless communication system including a transmitter 300, like a base station, and one or more receivers 302₁ to 302ₙ, like user devices, UEs. The transmitter 300 and the receivers 302 may communicate via one or more wireless communication links or channels 304a, 304b, 304c, like a radio link. The transmitter 300 may include one or more antennas ANT_{T} or an antenna array having a plurality of antenna elements, a signal processor 300a and a transceiver 300b, coupled with each other. The receivers 302 include one or more antennas ANT_{R} or an antenna array having a plurality of antennas, a signal processor 302a₁, 302aₙ, and a transceiver 302b₁, 302bₙ coupled with each other. The base station 300 and the UEs 302 may communicate via respective first wireless communication links 304a and 304b, like a radio link using the Uu interface, while the UEs 302 may communicate with each other via a second wireless communication link 304c, like a radio link using the PC5 interface. When the UEs are not served by the base station, are not be connected to a base station, for example, they are not in an RRC connected state, or, more generally, when no SL resource allocation configuration or assistance is provided by a base station, the UEs may communicate with each other over the sidelink. The system, the one or more UEs 302 and the base stations 300 may operate in accordance with the inventive teachings described herein.

The present invention provides an apparatus for a wireless communication system,
wherein the apparatus is to use a plurality of frequency bands for a communication with one or more network entities, e.g., one or more user devices or one or more base stations, in the wireless communication system,
wherein the apparatus is to receive from a transmitter or the one or more network entities a transport block, TB, the TB being split into a plurality of code block groups, CBGs, each CBG including one or more code blocks, CBs, and being confined to one of the plurality of frequency bands,
wherein the apparatus is to provide or predict a feedback for each of the CBGs indicating one or more of a successful receipt of the CBG, a non-successful receipt of the CBG, no need for redundancy for the CBG and a need for some redundancy for the CBG, amount of additional redundancy needed, e.g., a hybrid automatic repeat request, HARQ, feedback, and
wherein the apparatus is to compress the feedbacks and/or the predicted feedbacks for each of the CBGs into a compressed feedback based on an interference pattern on one or more of the frequency bands which is detectable at the apparatus and the transmitter or the one or more network entities, e.g. Listen-before-Talk, LBT, failure, and to transmit to the one or more of the network entities the compressed feedback.

In accordance with embodiments, the apparatus is to compress the feedbacks and/or the predicted feedbacks, the apparatus is to apply a lossless compression scheme or a lossy compression scheme, e.g., a probability-based coding using Huffman codes, or a variable length coding, or a frequency band based compression, or semi-lossy compression.

In accordance with embodiments, a successful receipt of the CBG, e.g., an acknowledgement, ACK, is indicated by a first value, e.g., a first bit value, and a non-successful receipt of the CBG, e.g., a non-acknowledgement, NACK, is indicated by a second value, e.g., a second bit value,.

In accordance with embodiments, the apparatus is to compress the feedbacks or the predicted feedbacks, the apparatus is to apply a variable length code book, the codebook including codes identifying some or all patterns of ACKs and NACKs for the plurality of CBGs, the length of a code increasing with the number of NACKs in case ACKs have a higher probability than NACKs, or increasing with the number of ACKs in case NACKs have a higher probability than ACKs

In accordance with embodiments, the apparatus is to compress the feedbacks or the predicted feedbacks, the apparatus is to represent the feedback or the predicted feedback for each frequency band by one value, the one value having the first value in case all of the CBGs in a frequency band are or are predicted to be successfully received, or the second value in case one of the CBGs in a frequency band is or is predicted to be not successfully received.

In accordance with embodiments, the apparatus is to compress the feedbacks or the predicted feedbacks, the apparatus is configured with a certain number of feedback values, e.g., HARQ bits, to transmit the feedbacks or the predicted feedbacks, the certain number of bits being less than a maximum number of CBGs possible in the TB.

In accordance with embodiments, the apparatus is to rearrange a mapping of the feedback values using a pre-defined set of rules.

In accordance with embodiments, in case there is a sufficient number of feedback values, the apparatus is to represent the feedback or the predicted feedback for each CBG by one value, the one value having the first value in case the CBG is or is predicted to be successfully received, or the second value in case the CBG is or is predicted to be not successfully received, and
in case there is an insufficient number of feedback values, the apparatus is to represent the feedback or the predicted feedback for each frequency band by one value, the one value having the first value in case all of the CBGs in a frequency band are successfully received, or the second value in case one of the CBGs in a frequency band is not successfully received.

In accordance with embodiments, in case of a failure of one or more of the frequency bands, the apparatus is to
- represent the feedback or the predicted feedback for each failed frequency band by one value, the one value indicating that all of the CBGs in the failed frequency band are not successfully received, or
- represent the feedback or the predicted feedback for each CBG in the one or more failed frequency bands by one value, the one value indicating that the CBG is not successfully received.

In accordance with embodiments,
a failure of one or more of the frequency bands is due to an interference in a band exceeding a certain threshold or another channel condition not meeting a certain criterion, or
one or more or all of the plurality of frequency bands are unlicensed subbands on which a communication is allowed for a certain transmission time, COT, responsive to a successful Listen-Before-Talk, LBT, and a failure of one or more of the frequency bands is due to a failed LBT for one or more of the unlicensed subbands

In accordance with embodiments, one or more or all of the frequency bands are unlicensed subbands, and wherein
- following a successful Listen-Before-Talk, LBT, for one or more unlicensed subbands, a communication is allowed during a certain transmission time, (COT) in an available unlicensed subband.
- following a failed Listen-Before-Talk, LBT, for one or more unlicensed subbands, a communication is not allowed in a non-available unlicensed subband.

The present invention provides an apparatus for a wireless communication system,
wherein the apparatus is to use a plurality of frequency bands for a communication with one or more network entities, e.g., one or more user devices or base stations, in the wireless communication system,
wherein the apparatus is to receive a transport block, TB, the TB being split into a plurality of code block groups, CBG, each CBG including one or more code blocks, CBs, and being confined to one of the plurality of frequency bands, and one or more of the plurality of CBGs spanning the TB duration,
wherein the apparatus is to provide a feedback or to predict a feedback for each of the CBGs indicating one or more of a successful receipt of the CBG, a non-successful receipt of the CBG, no need for redundancy for the CBG and a need for some redundancy for the CBG, amount of redundancy needed, e.g., a hybrid automatic repeat request, HARQ, feedback, and
wherein, in case of a failure of one or more of the frequency bands, the apparatus is to reduce the feedback or the predicted feedbacks, e.g., a number of bits for the feedback or the predicted feedback, according to the failed frequency bands.

In accordance with embodiments, in case of a failure of one or more of the frequency bands, the apparatus is to
- not send a feedback for the failed frequency bands, or
- send a compressed version of the feedback for the failed frequency bands.

In accordance with embodiments, the compressed version of the feedback for the failed frequency bands includes:
- for each non-failed frequency bands, a first value, e.g., a first bit value, indicating a successful receipt of the CBG, e.g., an acknowledgement, ACK, or a second value, e.g., a second bit value, indicating by and a non-successful receipt of the CBG, e.g., a non-acknowledgement, NACK, and
- for each failed frequency bands, one value indicating that all of the CBGs in the failed frequency bands are not successfully received.

In accordance with embodiments, the compressed version of the feedback for the failed frequency bands includes values indicating the failed frequency bands, thereby subjecting all the CBG confined in the failed frequency bands to a retransmission.

In accordance with embodiments, a failure of one or more of the frequency bands is due to an interference in a band exceeding a certain threshold or another channel condition not meeting a certain criterion, or
one or more or all of the plurality of frequency bands are unlicensed subbands on which a communication is allowed for a certain transmission time, COT, responsive to a successful Listen-Before-Talk, LBT, and a failure of one or more of the frequency bands is due to a failed LBT for one or more of the unlicensed subbands, or
one or more or all of the plurality of frequency bands are unlicensed subbands on which a communication is allowed for a certain transmission time, COT, responsive to a successful channel assessment procedure (e.g. RTS CTS) , and a failure of one or more of the frequency bands is due to a channel assessment for one or more of the unlicensed subbands.

In accordance with embodiments, the apparatus is to receive the subband results or is to detect that one or more frequency bands fails.

In accordance with embodiments, the apparatus is to detect that a subband fails, when determining:
- that all CBGs in the suband are not successfully received, e.g., are erroneously decoded, and
- that a reference signal detection, e.g., a DMRS detection, on the subband fails, or
- that the subband or channel is busy, e.g., using a RTS CTS procedure, wherein, responsive to determining the subband to be busy, the apparatus may omit sending clear to send, CTS, to the transmitter or the one or more network entities.

The present invention provides an apparatus for a wireless communication system,
wherein the apparatus is to use a plurality of frequency bands for a communication with one or more network entities, e.g., one or more user devices or one or more base stations, in the wireless communication system,
wherein the apparatus is to receive a transport block, TB, the TB being split into a plurality of code block groups, CBGs, each CBG including one or more code blocks, CBs, and being confined to one of the plurality of frequency bands,
wherein the apparatus is to provide or predict a regular feedback for each of the CBGs indicating a successful and/or a non-successful receipt of the CBG, e.g., a hybrid automatic repeat request, HARQ, feedback, and
wherein, in case an amount of interference on one or more of the frequency bands which is detectable at the receiver, e.g. an interference due to a hidden node problem, exceeds a certain threshold, the apparatus is to transmit an early feedback for one or more CBGs ahead of any regular feedback, the early feedback indicating for the one or more CBGs that a CBG or parts of a CBG are not received correctly or are predicted to be not decodable.

In accordance with embodiments the apparatus is to determine the amount of interference on a frequency band based on measurements of certain channel occupancy metrics, e.g., a DMRS decorrelation, an RSSI or the like.

In accordance with embodiments, the interference is due to a hidden node issue.

In accordance with embodiments, the apparatus is to transmit the early feedback on one or more configured or pre-configured resources in one or more of the frequency bands, e.g., using respective indicator channels on the frequency bands.

In accordance with embodiments, the early feedback includes one of the following:
- a predicted HARQ feedback,
- a prediction of how much additional redundancy is needed,
- a compressed HARQ feedback,
- an indication of the frequency band where the amount of interference exceeded the threshold,
- a single bit indicting that the amount of interference exceeded the threshold on any one of the frequency bands.

In accordance with embodiments, one or more or all of the frequency bands are unlicensed subbands, and wherein
- following a successful Listen-Before-Talk, LBT, for one or more unlicensed subbands, a communication is allowed during a certain transmission time, (COT) in an available unlicensed subband, or
- following a failed Listen-Before-Talk, LBT, for one or more unlicensed subbands, a communication is not allowed in a non-available unlicensed subband, or
- following a successful channel assessment procedure, e.g. RTS/CTS, for one or more unlicensed subbands, a communication is allowed during a certain transmission time, (COT) in an available unlicensed subband, or
- following a failed channel assessment procedure, e.g. RTS/CTS, for one or more unlicensed subbands, a communication is not allowed in a non-available unlicensed subband.

The present invention provides an apparatus for a wireless communication system,
wherein the apparatus is to use a plurality of frequency bands for a communication with one or more network entities, e.g., one or more user devices or one or more base stations, in the wireless communication system,
wherein the apparatus is to transmit to a receiver a transport block, TB, the TB being split into a plurality of code block groups, CBGs, each CBG including one or more code blocks, CBs, and being confined to one of the plurality of frequency bands,
wherein the apparatus is to receive from the receiver
   - a regular feedback or a regular predicted feedback for each of the CBGs indicating a successful and/or a non-successful receipt of the CBG, e.g., a hybrid automatic repeat request, HARQ, feedback, and
   - an early feedback ahead of any regular feedback for one or more CBGs on one or more of the frequency bands experiencing an amount of interference, exceeding a certain threshold, and
wherein, responsive to the early feedback, the apparatus is to transmit to the receiver a retransmission for the one or more CBGs on one or more frequency bands which are not affected by the interference.

In accordance with embodiments (see for example claim 26), the apparatus is to redistribute the resources on the one or more frequency bands which are not affected by the interference to one or more other receivers which are not affected by the interference.

In accordance with embodiments, the apparatus comprises a user device, UE, wherein the UE comprises one or more of a mobile terminal, or a stationary terminal, or a cellular IoT-UE, or a vehicular UE, or a vehicular group leader (GL) UE, or an loT, or a narrowband loT, NB-loT, device, or a WiFi non Access Point STAtion, non-AP STA, e.g., 802.11ax or 802.11be, or a ground based vehicle, or an aerial vehicle, or a drone, or a moving base station, or a road side unit, or a building, or any other item or device provided with network connectivity enabling the item/device to communicate using the wireless communication network, e.g., a sensor or actuator, and/or

the apparatus comprises a base station, BS, wherein the BS is implemented as mobile or immobile base station and comprises one or more of a macro cell base station, or a small cell base station, or a central unit of a base station, or a distributed unit of a base station, or a road side unit, or a UE, or a group leader (GL), or a relay, or a remote radio head, or an AMF, or an SMF, or a core network entity, or mobile edge computing entity, or a network slice as in the NR or 5G core context, or a WiFi AP STA, e.g., 802.11ax or 802.11 be, or any transmission/reception point, TRP, enabling an item or a device to communicate using the wireless communication network, the item or device being provided with network connectivity to communicate using the wireless communication network.

### SYSTEM

The present invention provides a wireless communication system, comprising one or more user devices and one or more base station, wherein one or more of the user devices and/or one or more of the base stations comprise an inventive apparatus.

### METHODS

The present invention provides a method for providing feedback in a wireless communication system, the method comprising:
receiving, by a receiver, from one or more network entities, e.g., one or more user devices or one or more base stations, in the wireless communication system, a transport block, TB, using a plurality of frequency bands, the TB being split into a plurality of code block groups, CBGs, each CBG including one or more code blocks, CBs, and being confined to one of the plurality of frequency bands,
providing or predicting a feedback for each of the CBGs indicating one or more of a successful receipt of the CBG, a non-successful receipt of the CBG, no need for redundancy for the CBG and a need for some redundancy for the CBG, amount of additional redundancy needed, e.g., a hybrid automatic repeat request, HARQ, feedback,
compressing the feedbacks and/or the predicted feedbacks for each of the CBGs into a compressed feedback based on an interference pattern on one or more of the frequency bands which is detectable at the receiver and the one or more network entities, e.g. Listen-before-Talk, LBT, failure, and
transmitting to one or more of the network entities the compressed feedback.

The present invention provides a method for providing feedback in a wireless communication system, the method comprising:
receiving, by a receiver, a transport block, TB, using a plurality of frequency bands for a communication with one or more network entities, e.g., one or more user devices or base stations, in the wireless communication system, the TB being split into a plurality of code block groups, CBG, each CBG including one or more code blocks, CBs, and being confined to one of the plurality of frequency bands, and one or more of the plurality of CBGs spanning the TB duration,
providing a feedback or to predict a feedback for each of the CBGs indicating one or more of a successful receipt of the CBG, a non-successful receipt of the CBG, no need for redundancy for the CBG and a need for some redundancy for the CBG, amount of redundancy needed, e.g., a hybrid automatic repeat request, HARQ, feedback, and
in case of a failure of one or more of the frequency bands, reducing the feedback or the predicted feedbacks, e.g., a number of bits for the feedback or the predicted feedback, according to the failed frequency bands.

The present invention provides a method for providing feedback in a wireless communication system, the method comprising:
receiving, by a receiver, a transport block, TB, using a plurality of frequency bands for a communication with one or more network entities, e.g., one or more user devices or base stations, in the wireless communication system, the TB being split into a plurality of code block groups, CBG, each CBG including one or more code blocks, CBs, and being confined to one of the plurality of frequency bands, and one or more of the plurality of CBGs spanning the TB duration,
providing or predicting a regular feedback for each of the CBGs indicating a successful and/or a non-successful receipt of the CBG, e.g., a hybrid automatic repeat request, HARQ, feedback, and
in case an amount of interference on one or more of the frequency bands which is detectable at the receiver, e.g. an interference due to a hidden node problem, exceeds a certain threshold, transmitting an early feedback for one or more CBGs ahead of any regular feedback, the early feedback indicating for the one or more CBGs that a CBG or parts of a CBG are not received correctly or are predicted to be not decodable.

The present invention provides a method for providing feedback in a wireless communication system, the method comprising:
transmitting to a receiver a transport block, TB, using a plurality of frequency bands for a communication with one or more network entities, e.g., one or more user devices or base stations, in the wireless communication system, the TB being split into a plurality of code block groups, CBG, each CBG including one or more code blocks, CBs, and being confined to one of the plurality of frequency bands, and one or more of the plurality of CBGs spanning the TB duration,
receiving from the receiver a regular feedback or a regular predicted feedback for each of the CBGs indicating a successful and/or a non-successful receipt of the CBG, e.g., a hybrid automatic repeat request, HARQ, feedback, or an early feedback ahead of any regular feedback for one or more CBGs on one or more of the frequency bands experiencing an amount of interference, exceeding a certain threshold, and
responsive to the early feedback, transmitting to the receiver a retransmission for the one or more CBGs on one or more frequency bands which are not affected by the interference.

Thus, aspects of the present invention address the above-mentioned problems regarding the signaling overhead associated with the feedback transmissions and the late feedback transmission, for example in URLLC communications. The respective aspects are described in more detail below and it is noted that the aspect may be implemented independent from each other or may be implemented together.

### Aspect 1

In accordance with embodiments of the first aspect of the present invention, the above-described problem regarding the signaling overhead associated with feedback transmissions in a data transmission in which the TB is split into a plurality of CBGs, as is illustrated in Fig. 2, is addressed by compressing the feedback associated with the respective CBGs dependent on an interference pattern on one or more of the frequency bands. In accordance with other embodiments of the first aspect, the feedback associated with the respective CBGs is reduced dependent on a failure of one or more of the more of the frequency bands. In other words, in accordance with the embodiments of the first aspect of the present invention, the signaling overhead regarding the feedback transmission is reduced by either compressing the feedback or reducing the feedback dependent on the state of the respective frequency bands, i.e., as to whether a certain frequency band allows for a transmission of data or not. In the latter case, no transmission may be possible because the interference on the respective frequency band, as detected by the receiver and by the transmitter may be too high, i.e., the amount of interference is above a certain threshold, or in case the transmitter did not transmit on one of the frequency bands to be used for the wideband operation, i.e., the subband failed, for example in case of an unsuccessful LBT for a certain subband in the NR-U operation.

In accordance with embodiments, the transmitter and/or the receiver may detect an interference pattern or an amount of interference on one or more of the frequency bands which indicates that the respective frequency band may not be used for a transmission. For example, the transmitter or the receiver may perform an LBT, as described above, and an LBT failure indicates that on the respective frequency band or sub-channel an interference pattern or an amount of interference is present, for example, from another transmitter of another communication system which does not allow using the frequency band. Another example is the hidden node problem, i.e., another device may not hear the gNB because of a physical distance to the gNB, however, it is close to the receiving UE and transmits on at least a part of the resources used for the data transmission between the gNB and the receiving UE and a substantial amount of interference from this other device may be experienced by the receiving UE on one or more of the frequency bands.

In such a situation, the receiver compresses the feedback, for example the CBG-based HARQ feedback for each frequency band, for example for each subband experiencing an LBT failure or an amount of interference above a threshold, using a lossless compression scheme or a lossy compression scheme. The compression schemes may include a probability-based coding using Hoffman codes or a variable length coding, or a frequency band based compression or a semi-lossy compression.

The variable length codebook may indicate, using for example a Hoffman-like source coding compression, respective ACKs/NACKs associated with the CBGs. In accordance with embodiments, a probability-based coding, for example Huffman codes may be employed as due to the nature of the fading channels, the failing probabilities of the different CBGs are not independent. For example, in case a first CBG in a subband failed, the probability that the others in the same subband fail as well increases significantly. Subband puncturing further increases this effect. When applying the probability based coding of the CBG feedback, such as Huffman codes, the feedback overhead is significantly reduced. In case of subband puncturing, i.e., in case certain subbands are not used, this may be also considered for the underlying probability distribution and in case the UE detects a missing subband it adapts the underlying probability distribution on which the coding is based.

In accordance with other embodiments, a lossy compression may be employed. A fixed length compression with a lossy-like coding may employ more NACKs as needed so as to avoid a high number of bits as a feedback, or may employ a NACK even in case not all of the CBGs within a subband failed to avoid feedback overhead. A compression using variable code lengths may be employed that uses a reduced number of codewords having an increasing length so as to signal that certain groups of CBGs are successfully or non-successfully received.

For example, the variable code length may employ an increasing number of bits for signaling the feedback. For example, when considering a scenario in which the receiver determines that, due to the given properties of the frequency bands, a successful transmission of the CBGs in a TB is more likely than a non-successful transmission, i.e., in case a ACK has a higher probability than a NACK, the following variable code length scheme may employed:

| | | |
|---|---|---|
| 0 | → | all ACK, |
| 10 | → | ½ ACK and ½ NACK, |
| 110 | → | ½ NACK and ½ ACK, |
| 1110 | → | ¾ NACKs and ¼ ACKs, |
| 1111 | → | all NACKs |

Thus, when considering the example depicted above in Fig. 2 using a TB with 8 CBGs, the feedback may be as follows:

| | |
|---|---|
| 0 | in case all 8 CBGs are successfully received, 8 ACKs. |
| 10 | CBG1 to CBG4 are successfully received and CBG5 to CBG8 are non-successfully received, i.e., 4 ACKs/4 NACKs. SB3 and SB4 experience an amount of interference beyond a certain threshold so that no successful reception is possible. |
| 110 | CB1 to CBG4 are non-successfully received and CBG5 to CBG8 are successfully received, 4 NACKs/4 ACKs. SB1 and SB2 experience an amount of interference beyond a certain threshold so that no successful reception is possible. |
| 1110 | CBG1 to CBG6 are non-successfully received and CBG7 and CBG8 are successfully received, 6 NACKs/2 ACKs. SB1 to SB3 experience an amount of interference beyond a certain threshold so that no successful reception is possible. |
| 1111 | all CBGs are non-successfully received, all NACKs, all subbands experience an amount of interference beyond a certain threshold so that no successful reception is possible. |

Thus, in this embodiment when assuming an acknowledgement of a successful receipt to have a higher probability than a non-successful reception, and when considering Fig. 2, the "0" means that all CBGs in Fig. 2 are successfully received, i.e., in none of the subbands SB1 to SB4 an interference pattern is experienced by the receiver or by the transmitter that does not allow a transmission over the subband. On the other hand, the feedback 10 is used in case the transmitter and/or the receiver detect an interference pattern in subband SB3 and SB4, e.g., a failure in these subbands and no transmission of CBG5 to CBG8. In case of a feedback 110 subbands SB1 and SB2 failed while subbands SB3 and SB4 allow for the transmission. In case of the feedback 1110, subbands SB1 to SB3 failed and only CBG7 and CBG8 in subband 4 are transmitted. In case of 1111, all subbands failed.

In case the receiver determines that a non-successful transmission is more likely, i.e., a NACK has a higher probability than a NACK, the above scheme may be reversed as follows:

| | | |
|---|---|---|
| 0 | → | all NACK, |
| 10 | → | ½ NACK and ½ NACK, |
| 110 | → | ½ ACK and ½ NACK, |
| 1110 | → | ¾ ACKs and ¼ NACKs, |
| 1111 | → | all ACKs |

Another embodiment employing a lossy compression scheme may indicate the feedback in the following manner, for example, when assuming three CBGs in a TB transmitted from the transmitter to the receiver.

| | | |
|---|---|---|
| 0 | → | all ACK |
| 10 | → | CBG1 NACK and CBG2/3 ACK |
| 110 | → | CBG2 NACK and CBG1/3 ACK |
| 1110 | → | CBG3 NACK and CBG1/2 ACK |
| 1111 | → | all NACK |

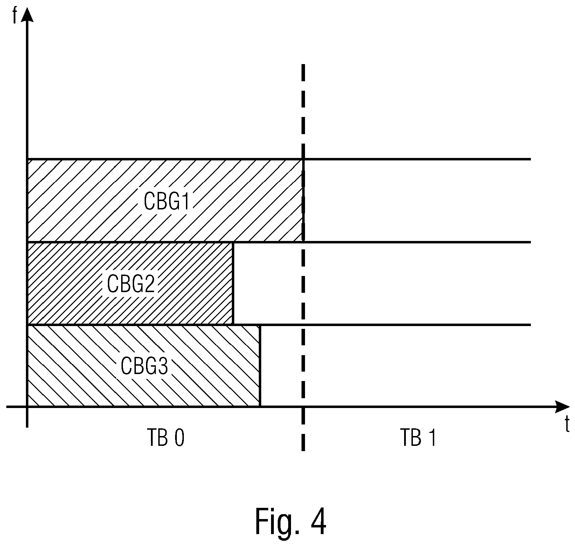

As is indicated in Fig. 4, in case of assuming three CBGs within a TB in a multi-band operation using three frequency bands, each frequency band in the TB includes only one CBG that may span a part of or the entire TB duration, and the feedback 0 means that on none of the subbands SB1 to SB3 an interference pattern is experienced by the transmitter and/or the receiver indicating that no transmission is possible. The feedback 10 indicates that an interference pattern is experienced on subband SB1 so that CBG1 may not be received, while no interference is experienced on subbands SB2 and SB3 so that the receipt of CBG2 and CBG3 may be acknowledged. The feedback 110 indicates that an interference is experienced on subband SB2 but not on subbands SB1 and SB3 so that CBG2 is associated with a NACK while for CBG1 and CBG3 a ACK is indicated. The feedback 1110 indicates that the subband SB3 experiences interference, so that the feedback associated with CBG3 is a NACK while the feedback for CBG1 and CBG2 is an ACK. The feedback 1111 indicates that on all subbands SB1 to SB3, interference is experienced so that all CBGs are indicated with a NACK.

In this embodiment, other than in the preceding embodiment, in which, in general, the probability of a ACK or a NACK over the entire frequency bands was considered, in this case the variable length is determined dependent on the failing probability determined in the system, for example by the transmitter and/or the receiver, for each subband. In the above-described example, the failing probabilities of the first subband SB1 is considered higher than the failing probability of the second subband which, in turn, is higher than the failing probability for the third subband. In other words, the failing of the first SB1 is most likely and the failing of the third subband is least likely so that for the more likely situations, the shorter code length is employed while for the less likely situations longer codewords are used.

In accordance with further embodiments, rather than sending a compressed feedback associated with the CBGs or groups of CBGs, a frequency or subband-based feedback may be employed which uses frequency band or subband-based ACKs/NACKs which also leads to a lossy compression of the feedback. For example, when considering Fig. 2 above, such a lossy compression scheme may use one bit per subband SB1, SB2, SB3 or SB4 for indicating an ACK or a NACK for all CBGs within this subband. Thus, in case the transmitter/receiver determines a certain interference pattern, for example an amount of interference above a certain threshold or an LBT failure for a certain subband, say subband SB4 in Fig. 2, the feedback for this subband is compressed to a one-bit feedback.

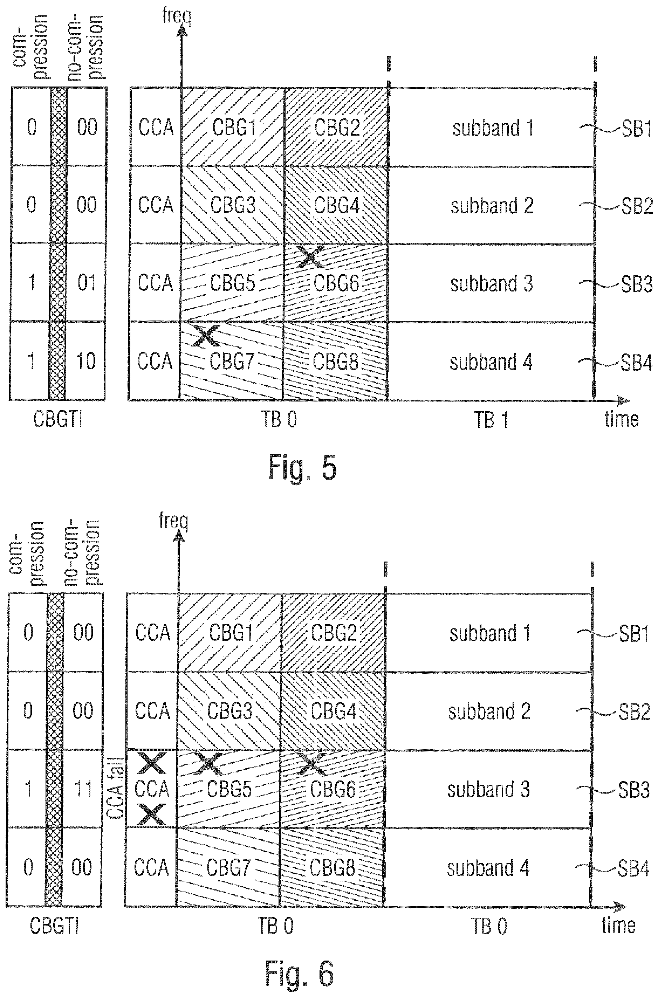

Fig. 5 illustrates an embodiment applying a lossy compression on the basis of a subband based feedback. Fig. 5 is similar to Fig. 2 but indicates, in addition, on the left hand side the CBGTI, the CBG transmission indicator. For example the gNB may define for a UE a maximum number of CBG transmit information feedback that may be indicated in a DCI. In Fig. 5, the CBGTI indicates, in the right hand column, the conventional non-compressed feedback in case CBG6 and CBG7 are not successfully received at the receiver, as is indicated by "×". The feedback for each subband may include, conventionally, one bit per CBG. Two CBGs are confined in each subband so that for each subband the feedback includes two bits. Thus, the conventional feedback is 00000101, namely for SB1 "00" indicates ACKs for CBG1 and CBG2, for SB2 "00"indicates ACKs for the CBG3 and CBG4, for SB3 "01" indicates an ACK for CBG5 and a NACK for CBG6, and for SB4 "10" indicates a NACK for CBG7 and an ACK for CBG8.

To reduce the signaling overhead, i.e., the number of bits that need to be signaled to the transmitter as the feedback information, and accordance with the present embodiment, the subband-based lossy compression scheme for indicating ACKs/NACKs may be employed, in accordance with which one bit per subband or frequency band is used as is illustrated in the left hand column of the CBGTI indicating the compressed feedback. In the depicted embodiment, the compressed feedback is "0" in case an interference pattern or amount of interference not causing a failure in the transmission is experienced at the transmitter or the receiver a subband, like subbands SB1 and SB2 in Fig. 5. On the other hand, such an interference pattern is experienced for SB3 and SB4 so that for these two subbands the feedback is "1", meaning a NACK for CBG5 to CBG6 despite the fact that in subbands SB3 and SB4 only CBG6 and CBG7 are not successfully received due to the interference pattern while CBG5 and CBG8 may be received successfully. Thus, in accordance with the present embodiment, the feedback is reduced or compressed from 00000101 to 0011. Naturally, in case more than the two CBGs per subband are used, meaning, conventionally, a corresponding number of bits, the amount of feedback is reduced even more significantly, for example in case of eight CBGs per subband and a total of four subbands from 64 bits to 4 bits.

In accordance with yet other embodiments, an adaptive semi-lossy compression scheme may be employed. Conventionally, as mentioned above, a number of bits to be sent as HARQ feedback is equal to the configured maximum number of CBGs. Thus, in case of 8 CBGs, as shown in Fig. 5, the number of bits for the HARQ feedback is 8, as is illustrated in the right hand column of CBGTI indicating the non-compressed feedback. The 8 HARQ feedback bits are used independent from the actual number of CBGs in the transmission, so that, for example, in case only 4 CBGs per TB still 8 HARQ feedback bits are provided as this is the maximum number of possible CBGs per TB. However, when using less than the maximum number of CBGs, a signaling overhead with regard to the HARQ feedback is experienced, as not the entire number of feedback is needed. Therefore, in accordance with embodiments, an adaptive semi-lossy compression scheme for the CBG HARQ-ACK feedback is provided and, in addition to the maximum number of CBGs, a certain number n is configured, for example by the gNB, which indicates the number of HARQ feedbacks to be used and to be transmitted per PUSCH/PDSCH/PSSCH. Based on the actual number of CBGs and the subbands experiencing to much interference, the receiver may rearrange the mapping of the feedback bits using pre-defined rules. For example, in case sufficient bits are available, each CBG may be mapped to a single feedback bit, and in case not sufficient bits are available for each CBG, for example in case n is smaller than the actual number of CBGs used, the CBGs may be merged subband-wise as described above with reference to Fig. 5.

In accordance with yet other embodiments of the first aspect, when the CBGs are confined to the subbands as described above with reference to Fig. 2 and to Fig. 5, in case of a failure of a subband, the CBGs are not transmitted. For example, in case the transmitter that performed LBT experiences an LBT failure for a certain frequency band or subband, the CBGs scheduled for transmission on this subband are not transmitted. To reduce the HARQ feedback signaling overhead, the receiver, when being aware that the LBT failure occurred on one of the subbands, may, in accordance with embodiments, not send any HARQ feedback for any of the failing frequency bands or subbands. Further, the transmitter which is aware that the subband transmission failed, may autonomously perform a retransmission of the CBGs for the failed subband.

In accordance with other embodiments, instead of sending not any HARQ feedback, the receiver may compress the conventional feedback by sending only a one bit CBG-based NACK for the failing subbands, indicating that all CBGs in the failing subband were not successfully received. Fig. 6 illustrates an embodiment, similar to Fig. 2, in which subband SB3 is a failed subband, i.e., the CCA or LBT was not successful as indicated by "××" in the CCA field. In such a case, the conventional feedback which includes 8 bits may be reduced by 7 bits as in accordance with the present embodiment, the feedback for the failed subband may be reduced to a single bit indicating a NACK (by signaling a "1" for the entire subband). Thus, the receiver may send n bits for the subbands received and a single bit for the failed subband.

In accordance with other embodiments, instead of sending a single bit, the receiver may send only the number of bits needed to identify the failing subband. For example, when considering the situation in Fig. 6 and assuming that each subband includes more than two CBGs, the conventional feedback for each subband is 3 or more bits. When employing 4 subbands, the signaling for a failed subband indicates the actual subband number, and in the embodiment of Fig. 6, the receiver signals "10" indicating that the third subband failed.

Responsive to the signaling of a failed subband, the transmitter may perform a retransmission of the CBGs for the failed subband.

The receiver may become aware of a failed subband, for example by receiving an identification from the gNB for which of the subbands the LBT was successful, the LBT results may be transmitted to the receiver. In accordance with other embodiments, in case the failing subbands are not signaled to the receiver, the receiver, nevertheless, may detect such subbands by determining that all CBGs in the subbands to be erroneously decoded, due to CRC errors or NACKs, and/or by determining that all DMRS detection of the subbands failed, for example a correlation of the DMRS, and/or by determining that the subband or channel is busy, e.g., using a Ready-To-Send/Clear-To-Send, RTS/CTS, procedure , wherein, responsive to determining the subband to be busy, the apparatus may omit sending clear to send, CTS, to the transmitter.

In other words, in accordance with this embodiment of the present embodiment, the receiver may reduce the number of bits used for the feedback according to the failing subbands.

When considering Fig. 6, assuming the four subbands SB1 to SB2 with the two bit per subband HARQ feedback transmission, with no DMRS failure, i.e., no failing subbands and/or all NACK on any subband, the maximum HARQ feedback for the four bands is sent, namely eight bits. In case the receiver becomes aware that a certain subband failed, for example due to a DMRS failure on one subband or the indication of a subband that failed by the gNB, the receiver, when not sending a feedback for the failed subband, only employs the HARQ feedback for three bands which is then only six bits and, when two subbands fail, it is only four bits, thereby reducing the signaling overhead associated with the HARQ feedback dependent on the failing subbands.

Thus, embodiments of the first aspect of the present invention provide for a reduction in the HARQ feedback from a receiver to a transmitter by reducing, for example, the number of bits associated for a feedback for CBGs on subbands or frequency bands experiencing a certain interference pattern or a certain amount of interference in a way as described above.

### Aspect 2

Examples of a second aspect address the issue of a feedback transmission, also referred to as a regular feedback, only once a data transmission is received at the receiver and determined to be successful or non-successful. As stated above, for certain applications or services requiring a certain reliability and/or a certain latency, like URLLC services or applications, a retransmission occurring only once the reception has been completed at the receiver may be too late. For example, in case an amount of interference on one or more of the frequency bands used for the multi-band operation, that may be detected at the receiver, is high, lie above a threshold, there is no other solution than providing the HARQ feedback after the transmission which, however, causes an additional delay.

The amount of interference detectable at the receiver may be due to, for example, the hidden node problem, i.e., another device may not hear the gNB because of a physical distance to the gNB, however, it is close to the receiving UE and transmits on at least a part of the resources used for the data transmission to the receiving UE so that, on one or more of the frequency bands a substantial amount of interference from this other device is experienced by the receiving UE. The amount of interference may be determined by the receiving UE based on measurements of certain channel occupancy metrics, for example a DMRS decorrelation, an RSSI or the like.

In accordance with examples of the second aspect, the problem with the regular feedback in such situations is addressed by providing an early feedback that is transmitted ahead of any regular feedback. The early feedback may be signaled the amount of interference detected by the receiver exceeds a certain or predefined threshold, and responsive to the early feedback, a transmitter may perform a retransmission for one or more of the CBGs in the affected frequency band. The early feedback may indicate for the one or more CBGs that a CBG or parts of a CBG are not received correctly or are predicted to be not decodable.

The early feedback may be transmitted in an early feedback channel, for example an early HARQ indicator channel or a hidden node indicator channel, which may be provided in one or more of the frequency bands, for example in one or more of the subbands illustrated above in Fig. 2 for example. Once the receiving UE determines the situation in which an amount of interference, which may heavily effect the data transmission quality on the channel, is experienced, the UE may report an early feedback or a hidden note indication on one or more of the indicator channels on a different frequency band than the one on which the interference is experienced. The resources for the indicator channel on the different frequency bands may be configured in an RRC message or may be dynamically allocated using DCls.

Responsive to the early feedback, the transmitter, like the gNB, may perform a fast retransmission on those frequency bands that are not affected by the interference, like those not affected by the hidden node problem.

In accordance with examples, the gNB being aware of the affected frequency bands may redistribute the resources on the affected frequency band to other UEs which are not affected by the hidden node issue.

The early HARQ feedback or the hidden node indication may include a predicted HARQ feedback, or a prediction of how much additional redundancy is needed, or a compressed HARQ feedback as described above with reference to the first aspect of the present invention, or a subband indication explicitly indicating the subband in which the amount of interference exceeds a certain threshold, or it may be a single bit indicating that in one or more of the subbands the interference amount exceeds the predefined threshold, for example that the hidden node problem occurred somewhere, thereby causing a complete retransmission of the TB at a later time.

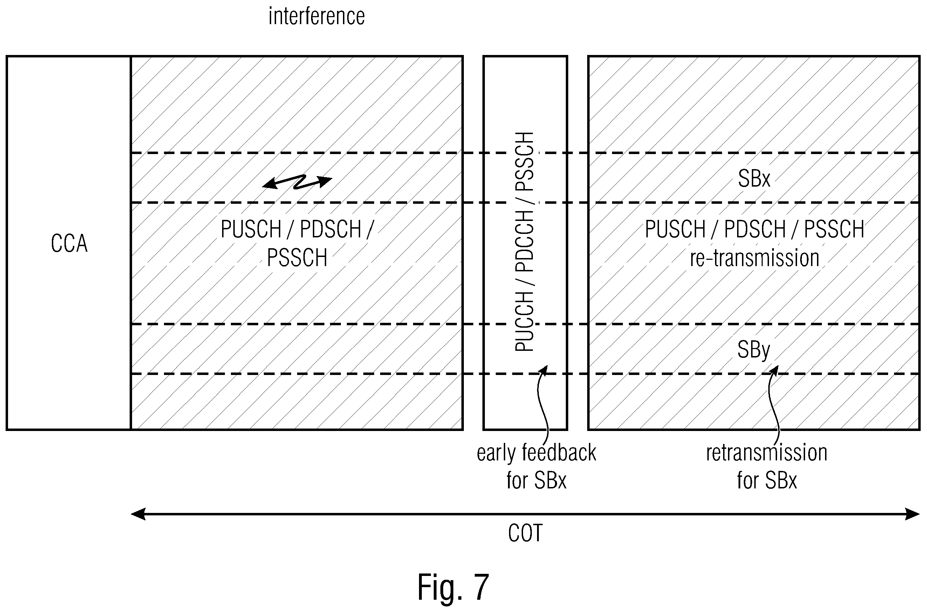

In accordance with examples operating in the unlicensed spectrum, the early feedback may be transmitted within the transmitter initiated COT. Fig. 7 illustrates an example for a transmitter initiated COT including multiple subbands and employing an early feedback. For example, following a successful LBT for SBx, in a first part of the COT, the transmitter transmits the data using the PUSCH/PDSCH/PSSCH. However, the receiver determines an amount of interference on the subband that is above a certain level or threshold, so that the UE signals ahead of or earlier than the regular feedback, which is only provided once the transmission is completed, the early feedback which may signal an ACK/NACK in the PUCCH/PDCCH/PSCCH in another subband to the transmitter, like SBy in Fig. 7. In accordance with examples, in case the interference amount exceeds a certain level or a certain threshold, the NACK is sent as early HARQ so that in a later part of the transmitter initiated COT a retransmission may be performed on the PUSCH/PDSCH/PSSCH of another subband SBy as is indicated in Fig. 7. The retransmission may be in the same subband as the feedback or in a different subband.

In accordance with examples, the frequency bands may be unlicensed subbands so that following a successful Listen-Before-Talk, LBT, for one or more unlicensed subbands, a communication is allowed during a certain transmission time, (COT) in an available unlicensed subband, or following a failed Listen-Before-Talk, LBT, for one or more unlicensed subbands, a communication is not allowed in a non-available unlicensed subband, or following a successful channel assessment procedure, e.g. RTS/CTS, for one or more unlicensed subbands, a communication is allowed during a certain transmission time, (COT) in an available unlicensed subband, or following a failed channel assessment procedure, e.g. RTS/CTS, for one or more unlicensed subbands, a communication is not allowed in a non-available unlicensed subband.

Thus, the second aspect avoids latencies or delays as they are experienced when employing regular HARQ feedback that is generated once the transmission has been completed. Examples provide, dependent on a monitoring of the interference level on a certain subband, an early feedback, if needed, so as to request a retransmission of CBGs associated with the affected subband.

### General

In the embodiments described above, reference has been made to a HARQ feedback, however, the invention is not limited to a HARQ feedback, rather, any feedback mechanism may be employed. Further, in accordance with further embodiments all aspects may employ a predicted feedback as well, like predicted HARQ. Further, in accordance with other embodiments, the feedback may signal or indicate that there is no need for a redundancy for the data or that there is a need for some redundancy for the data. In accordance with yet other embodiments, the feedback may signal or indicate an amount of additional redundancy needed for the data. For example, the feedback may indicate that no more redundancy is needed for the data, or that a little more redundancy is needed, or that a lot more redundancy is needed. In other words, an decreasing or increasing amount of redundancy may be signaled.

In the embodiments described above, reference is made to a frequency band experiencing an interference. In accordance with embodiments, a failure of one or more of the frequency bands may be due to an interference in a band exceeding a certain threshold or another channel condition not meeting a certain criterion. In accordance with other embodiments, when one or more or all of the plurality of frequency bands are unlicensed subbands on which a communication is allowed for a certain transmission time, COT, responsive to a successful Listen-Before-Talk, LBT, a failure of one or more of the frequency bands may be due to a failed LBT for one or more of the unlicensed subbands. In accordance with yet other embodiments, when one or more or all of the plurality of frequency bands are unlicensed subbands on which a communication is allowed for a certain transmission time, COT, responsive to a successful channel assessment procedure (e.g. RTS CTS) , a failure of one or more of the frequency bands may be due to a channel assessment for one or more of the unlicensed subbands.

Embodiments of the present invention have been described in detail above, and the respective embodiments and aspects may be implemented individually or two or more of the embodiments or aspects may be implemented in combination.

Further, the embodiments described herein may be employed when communicating via a single subband that may be an unlicensed subband. However, the inventive approach is not limited to a communication over a single subband, rather, the communication may be over a plurality of subbands for a communication with one or more entities, like other UE(s) or other gNB(s), in the wireless communication system, and some or all of the plurality of subbands may be unlicensed subbands on which a communication is allowed for a certain transmission time (COT) responsive to a successful channel access procedure, e.g. Listen-Before-Talk, LBT, or a request to send/clear to send mechanism, RTS/CTS mechanism, that may be used for higher frequencies.

With regard to the above-described embodiments of the various aspects of the present invention, it is noted that they have been described in an environment in which a communication is between a transmitter, like a gNB or a UE, and a receiver, like a UE and a gNB. However, the invention is not limited to such a communication, rather, the above-described principles may equally be applied for a device-to-device communication, like a D2D, V2V, V2X communication. In such scenarios, the communication is over a sidelink between the respective devices. The transmitter is a first UE and the receiver is a second UE communicating using the sidelink resources.

In accordance with embodiments, the wireless communication system may include a terrestrial network, or a non-terrestrial network, or networks or segments of networks using as a receiver an airborne vehicle or a spaceborne vehicle, or a combination thereof.

In accordance with embodiments, the user device, UE, may be one or more of a mobile terminal, or a stationary terminal, or a cellular IoT-UE, or a vehicular UE, or a vehicular group leader (GL) UE, or an IoT, or a narrowband IoT, NB-IoT, device, or a WiFi non Access Point STAtion, non-AP STA, e.g., 802.11ax or 802.11be, or a ground based vehicle, or an aerial vehicle, or a drone, or a moving base station, or a road side unit, or a building, or any other item or device provided with network connectivity enabling the item/device to communicate using the wireless communication network, e.g., a sensor or actuator, and/or the base station, BS, may be implemented as mobile or immobile base station and may be one or more of a macro cell base station, or a small cell base station, or a central unit of a base station, or a distributed unit of a base station, or a road side unit, or a UE, or a group leader (GL), or a relay, or a remote radio head, or an AMF, or an SMF, or a core network entity, or mobile edge computing entity, or a network slice as in the NR or 5G core context, or a WiFi AP STA, e.g., 802.11ax or 802.11be, or any transmission/reception point, TRP, enabling an item or a device to communicate using the wireless communication network, the item or device being provided with network connectivity to communicate using the wireless communication network.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

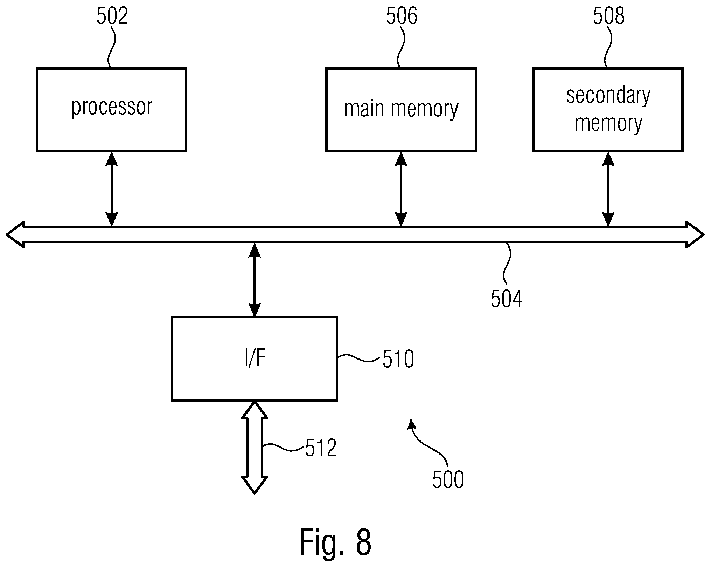

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 8 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### List of Acronyms and Symbols

- BS: Base Station
- CBR: Channel Busy Ratio
- D2D: Device-to-Device
- EN: Emergency Notification
- eNB: Evolved Node B (base station)
- FDM: Frequency Division Multiplexing
- LTE: Long-Term Evolution
- PC5: Interface using the Sidelink Channel for D2D communication
- PPPP: ProSe per packet priority
- PRB: Physical Resource Block
- ProSe: Proximity Services
- RA: Resource Allocation
- SCI: Sidelink Control Information
- SL: sidelink
- sTTI: Short Transmission Time Interval
- TDM: Time Division Multiplexing
- TDMA: Time Division Multiple Access
- TPC: Transmit power control/transmit power command
- UE: User Entity (User Terminal)
- URLLC: Ultra-Reliable Low-Latency Communication
- V2V: Vehicle-to-vehicle
- V2I: Vehicle-to-infrastructure
- V2P: Vehicle-to-pedestrian
- V2N: Vehicle-to-network
- V2X: Vehicle-to-everything, i.e., V2V, V2I, V2P, V2N

## Claims

1. An apparatus (300, 302₁-302ₙ) for a wireless communication system (100),
wherein the apparatus (300, 302₁-302ₙ) is configured to use a plurality of frequency bands (SB1-SB4) for a communication with one or more network entities in the wireless communication system (100),
wherein the apparatus (300, 302₁-302ₙ) is configured to receive from the one or more network entities a transport block, TB, the TB being split into a plurality of code block groups, CBGs, each CBG including one or more code blocks, CBs, and being confined to one of the plurality of frequency bands (SB1-SB4), and
wherein the apparatus (300, 302₁-302ₙ) is to provide a feedback or a predicted feedback for each of the CBGs indicating one or more of a successful receipt of the CBG, a non-successful receipt of the CBG, no need for redundancy for the CBG, a need for some redundancy for the CBG, and an amount of additional redundancy needed,
**characterized in that**
the apparatus (300, 302₁-302ₙ) is configured to compress the feedbacks and/or the predicted feedbacks for each of the CBGs into a compressed feedback based on an interference pattern on one or more of the frequency bands (SB1-SB4) which is detected at the apparatus (300, 302₁-302ₙ) and to transmit to the one or more of the network entities the compressed feedback.

2. The apparatus (300, 302₁-302ₙ) of claim 1, wherein, to compress the feedbacks and/or the predicted feedbacks, the apparatus (300, 302₁-302ₙ) is to apply a lossless compression scheme or a lossy compression scheme, or a frequency band based compression, or semi-lossy compression.

3. The apparatus (300, 302₁-302ₙ) of any one of the preceding claims, wherein a successful receipt of the CBG is indicated by a first value, and a non-successful receipt of the CBG is indicated by a second value.

4. The apparatus (300, 302₁-302ₙ) of claim 3, wherein, to compress the feedbacks or the predicted feedbacks, the apparatus (300, 302₁-302ₙ) is to apply a variable length code book, the codebook including codes identifying some or all patterns of ACKs and NACKs for the plurality of CBGs, the length of a code increasing with the number of NACKs in case ACKs have a higher probability than NACKs, or increasing with the number of ACKs in case NACKs have a higher probability than ACKs

5. The apparatus (300, 302₁-302ₙ) of claim 3, wherein, to compress the feedbacks or the predicted feedbacks, the apparatus (300, 302₁-302ₙ) is to represent the feedback or the predicted feedback for each frequency band (SB1-SB4) by one value, the one value having the first value in case all of the CBGs in a frequency band (SB1-SB4) are or are predicted to be successfully received, or the second value in case one of the CBGs in a frequency band (SB1-SB4) is or is predicted to be not successfully received.

6. The apparatus (300, 302₁-302ₙ) of claim 3, wherein, to compress the feedbacks or the predicted feedbacks, the apparatus (300, 302₁-302ₙ) is configured with a certain number of feedback values to transmit the feedbacks or the predicted feedbacks, the certain number of bits being less than a maximum number of CBGs possible in the TB.

7. The apparatus (300, 302₁-302ₙ) of claim 6, wherein the apparatus (300, 302₁-302ₙ) is to rearrange a mapping of the feedback values using a pre-defined set of rules.

8. The apparatus (300, 302₁-302ₙ) of claim 6 or 7, wherein
in case there is a sufficient number of feedback values, the apparatus (300, 302₁-302ₙ) is to represent the feedback or the predicted feedback for each CBG by one value, the one value having the first value in case the CBG is or is predicted to be successfully received, or the second value in case the CBG is or is predicted to be not successfully received, and
wherein, in case there is an insufficient number of feedback values, the apparatus (300, 302₁-302ₙ) is to represent the feedback or the predicted feedback for each frequency band (SB1-SB4) by one value, the one value having the first value in case all of the CBGs in a frequency band (SB1-SB4) are successfully received, or the second value in case one of the CBGs in a frequency band (SB1-SB4) is not successfully received.

9. The apparatus (300, 302₁-302ₙ) of any one of claims 6 to 8, wherein
in case of a failure of one or more of the frequency bands (SB1-SB4), the apparatus (300, 302₁-302ₙ) is to
- represent the feedback or the predicted feedback for each failed frequency band (SB1-SB4) by one value, the one value indicating that all of the CBGs in the failed frequency band (SB1-SB4) are not successfully received, or
- represent the feedback or the predicted feedback for each CBG in the one or more failed frequency bands (SB1-SB4) by one value, the one value indicating that the CBG is not successfully received.

10. The apparatus (300, 302₁-302ₙ) of any one of claims 6 to 9, wherein
a failure of one or more of the frequency bands (SB1-SB4) is due to an interference in a frequency band (SB1-SB4) exceeding a certain threshold or another channel condition not meeting a certain criterion, or
one or more or all of the plurality of frequency bands (SB1-SB4) are unlicensed subbands on which a communication is allowed for a certain transmission time, COT, responsive to a successful Listen-Before-Talk, LBT, and a failure of one or more of the frequency bands (SB1-SB4) is due to a failed LBT for one or more of the unlicensed subbands.

11. The apparatus (300, 302₁-302ₙ) of any one of the preceding claims, wherein one or more or all of the frequency bands (SB1-SB4) are unlicensed subbands, and wherein
- following a successful Listen-Before-Talk, LBT, for one or more unlicensed subbands, a communication is allowed during a certain transmission time in an available unlicensed subband.
- following a failed Listen-Before-Talk, LBT, for one or more unlicensed subbands, a communication is not allowed in a non-available unlicensed subband.

12. The apparatus (300, 302₁-302ₙ) of any one of the preceding claims, wherein
the apparatus (302₁-302ₙ) comprises a user device, UE, wherein the UE comprises one or more of a mobile terminal, or a stationary terminal, or a cellular IoT-UE, or a vehicular UE, or a vehicular group leader, GL, UE, or an IoT, or a narrowband loT, NB-loT, device, or a WiFi non Access Point STAtion, non-AP STA, or a ground based vehicle, or an aerial vehicle, or a drone, or a moving base station, or a road side unit, or a building, or any other item or device provided with network connectivity enabling the item/device to communicate using the wireless communication network, and/or
the apparatus (300) comprises a base station, BS, wherein the BS is implemented as mobile or immobile base station and comprises one or more of a macro cell base station, or a small cell base station, or a central unit of a base station, or a distributed unit of a base station, or a road side unit, or a UE, or a group leader, GL, or a relay, or a remote radio head, or an AMF, or an SMF, or a core network entity, or mobile edge computing entity, or a network slice as in the NR or 5G core context, or a WiFi AP STA, or any transmission/reception point, TRP, enabling an item or a device to communicate using the wireless communication network, the item or device being provided with network connectivity to communicate using the wireless communication network.

13. A wireless communication system (100), comprising one or more user devices and one or more base station, wherein one or more of the user devices and/or one or more of the base stations comprise an apparatus (300, 302₁-302ₙ) of any one of the preceding claims.

14. A method for providing feedback in a wireless communication system (100), the method comprising:
receiving, by a receiver, from one or more network entities in the wireless communication system (100), a transport block, TB, using a plurality of frequency bands (SB1-SB4), the TB being split into a plurality of code block groups, CBGs, each CBG including one or more code blocks, CBs, and being confined to one of the plurality of frequency bands (SB1-SB4), and
providing or a feedback or a predicted feedback for each of the CBGs indicating one or more of a successful receipt of the CBG, a non-successful receipt of the CBG, no need for redundancy for the CBG, a need for some redundancy for the CBG, and an amount of additional redundancy needed,
**characterized by**
compressing the feedbacks and/or the predicted feedbacks for each of the CBGs into a compressed feedback based on an interference pattern on one or more of the frequency bands (SB1-SB4) which is detected at the receiver and
transmitting to the one or more of the network entities the compressed feedback.

15. A computer program product comprising instructions which, when the program is executed by a computer, causes the computer to carry the method in accordance with claim 14.

## Patentansprüche

1. Eine Vorrichtung (300, 302₁-302ₙ) für ein Drahtloskommunikationssystem (100),
wobei die Vorrichtung (300, 302₁-302ₙ) dazu konfiguriert ist, eine Mehrzahl von Frequenzbändern (SB1-SB4) zu einer Kommunikation mit einem oder mehreren Netzwerkeinheiten in dem Drahtloskommunikationssystem (100) zu verwenden,
wobei die Vorrichtung (300, 302₁-302ₙ) dazu konfiguriert ist, von dem einen oder den mehreren Netzwerkeinheiten einen Transportblock, TB, zu empfangen, wobei der TB in eine Mehrzahl von Codeblockgruppen, CBG, aufgeteilt ist, wobei jede CBG einen oder mehrere Codeblöcke, CB, umfasst und auf eines der Mehrzahl von Frequenzbändern (SB1-SB4) begrenzt ist, und
wobei die Vorrichtung (300, 302₁-302ₙ) dazu dient, eine Rückkopplung oder eine vorausgesagte Rückkopplung für jede der CBG bereitzustellen, welches eines oder mehrere aus Folgenden anzeigt: einen erfolgreichen Empfang der CBG, einen nicht erfolgreichen Empfang der CBG, keinen Bedarf an Redundanz für die CBG, einen Bedarf an einer gewissen Redundanz für die CBG und einen Betrag zusätzlich benötigter Redundanz, **dadurch gekennzeichnet, dass**
die Vorrichtung (300, 302₁-302ₙ) dazu konfiguriert ist, die Rückkopplungen und/oder die vorausgesagten Rückkopplungen für jede der CBG in eine komprimierte Rücckopplung zu komprimieren, basierend auf einem Interferenzmuster auf einem oder mehreren der Frequenzbänder (SB1-SB4), das an der Vorrichtung (300, 302₁-302ₙ) erfasst wird, und die komprimierte Rückkopplung an die eine oder die mehreren Netzwerkeinheiten zu senden.

2. Die Vorrichtung (300, 302₁-302ₙ) gemäß Anspruch 1, wobei die Vorrichtung (300, 302₁-302ₙ) zum Komprimieren der Rückkopplungen und/oder der vorausgesagten Rückkopplungen dazu dient, ein verlustfreies Komprimierungsschema oder ein verlustbehaftetes Komprimierungsschema oder eine frequenzbandbasierte Komprimierung oder eine halb-verlustbehaftete Komprimierung anzuwenden.

3. Die Vorrichtung (300, 302₁-302ₙ) gemäß einem der vorhergehenden Ansprüche, wobei ein erfolgreicher Empfang der CBG durch einen ersten Wert angezeigt wird und ein nicht erfolgreicher Empfang der CBG durch einen zweiten Wert angezeigt wird.

4. Die Vorrichtung (300, 302₁-302ₙ) gemäß Anspruch 3, wobei die Vorrichtung (300, 302₁-302ₙ) zum Komprimieren der Rückkopplungen oder der vorausgesagten Rücckopplungen dazu dient, ein Codebuch mit variabler Länge anzuwenden, wobei das Codebuch Codes umfasst, die einige oder alle Muster von ACK und NACK für die Mehrzahl von CBG identifizieren, wobei die Länge eines Codes mit der Anzahl an NACK zunimmt, wenn ACK eine höhere Wahrscheinlichkeit als NACK aufweisen, oder mit der Anzahl an ACK zunimmt, wenn NACK eine höhere Wahrscheinlichkeit als ACK aufweisen.

5. Die Vorrichtung (300 302₁-302ₙ) gemäß Anspruch 3, wobei die Vorrichtung (300, 302₁-302ₙ) zum Komprimieren der Rückkopplungen oder der vorausgesagten Rücckopplungen dazu dient, die Rückkopplung oder die vorausgesagte Rückkopplung für jedes Frequenzband (SB1-SB4) durch einen Wert zu repräsentieren, wobei der eine Wert den ersten Wert aufweist, wenn alle der CBG in einem Frequenzband (SB1-SB4) erfolgreich empfangen werden oder der erfolgreiche Empfang derselben vorausgesagt ist, oder den zweiten Wert aufweist, wenn eine der CBG in einem Frequenzband (SB1-SB4) nicht erfolgreich empfangen wird oder der nicht erfolgreiche Empfang derselben vorausgesagt ist.

6. Die Vorrichtung (300, 302₁-302ₙ) gemäß Anspruch 3, wobei die Vorrichtung (300, 302₁-302ₙ) zum Komprimieren der Rückkopplungen oder der vorausgesagten Rücckopplungen mit einer bestimmten Anzahl von Rückkopplungswerten konfiguriert ist, um die Rückkopplungen oder die vorausgesagten Rückkopplungen zu senden, wobei die bestimmte Anzahl von Bits kleiner als eine maximale Anzahl von möglichen CBG in dem TB ist.

7. Die Vorrichtung (300, 302₁-302ₙ) gemäß Anspruch 6, wobei die Vorrichtung (300, 302₁-302ₙ) dazu dient, eine Abbildung der Rückkopplungswerte unter Verwendung eines vordefinierten Regelsatzes neuzuordnen.

8. Die Vorrichtung (300, 302₁-302ₙ) gemäß Anspruch 6 oder 7, wobei
dann, wenn eine ausreichende Anzahl von Rückkopplungswerten vorliegt, die Vorrichtung (300, 302₁-302ₙ) dazu dient, die Rückkopplung oder die vorausgesagte Rückkopplung für jede CBG durch einen Wert zu repräsentieren, wobei der eine Wert den ersten Wert aufweist, wenn die CBG erfolgreich empfangen wird oder der erfolgreiche Empfang derselben vorausgesagt ist, oder den zweiten Wert aufweist, wenn die CBG nicht erfolgreich empfangen wird oder der nicht erfolgreiche Empfang derselben vorausgesagt ist, und
wobei dann, wenn eine nicht ausreichende Anzahl von Rückkopplungswerten vorliegt, die Vorrichtung (300, 302₁-302ₙ) dazu dient, die Rückkopplung oder die vorausgesagte Rückkopplung für jedes Frequenzband (SB1-SB4) durch einen Wert zu repräsentieren, wobei der eine Wert den ersten Wert aufweist, wenn alle der CBG in einem Frequenzband (SB1-SB4) erfolgreich empfangen werden, oder den zweiten Wert aufweist, wenn eine der CBG in einem Frequenzband (SB1-SB4) nicht erfolgreich empfangen wird.

9. Die Vorrichtung (300, 302₁-302ₙ) gemäß einem der Ansprüche 6 bis 8, wobei
die Vorrichtung (300, 302₁-302ₙ) bei einem Ausfall eines oder mehrerer der Frequenzbänder (SB1-SB4) dazu dient,
- die Rückkopplung oder die vorausgesagte Rückkopplung für jedes ausgefallene Frequenzband (SB1-SB4) durch einen Wert zu repräsentieren, wobei der eine Wert anzeigt, dass alle der CBG in dem ausgefallenen Frequenzband (SB1-SB4) nicht erfolgreich empfangen werden, oder
- die Rückkopplung oder die vorausgesagte Rückkopplung für jede CBG in dem einen oder den mehreren ausgefallenen Frequenzbändern (SB1-SB4) durch einen Wert zu repräsentieren, wobei der eine Wert anzeigt, dass die CBG nicht erfolgreich empfangen wird.

10. Die Vorrichtung (300, 302₁-302ₙ) gemäß einem der Ansprüche 6 bis 9, wobei
ein Ausfall eines oder mehrerer der Frequenzbänder (SB1-SB4) durch eine Interferenz in einem Frequenzband (SB1-SB4), die einen bestimmten Schwellwert überschreitet, oder durch eine andere Kanalbedingung bedingt ist, die ein bestimmtes Kriterium nicht erfüllt, oder
eines oder mehrere oder alle der Mehrzahl von Frequenzbändern (SB1-SB4) nicht lizensierte Teilbänder sind, auf denen eine Kommunikation für eine bestimmte Sendezeit, COT, zulässig ist, ansprechend auf ein erfolgreiches Listen-Before-Talk, LBT, und ein Ausfall eines oder mehrerer der Frequenzbänder (SB1-SB4) durch ein ausgefallenes LBT für eines oder mehrere der nicht lizensierten Teilbänder bedingt ist.

11. Die Vorrichtung (300, 302₁-302ₙ) gemäß einem der vorhergehenden Ansprüche, wobei eines oder mehrere oder alle der Frequenzbänder (SB1-SB4) nicht lizensierte Teilbänder sind, und wobei
- im Anschluss an ein erfolgreiches Listen-Before-Talk, LBT, für eines oder mehrere nicht lizensierte Teilbänder eine Kommunikation während einer Sendezeit in einem verfügbaren nicht lizensierten Teilband zulässig ist.
- im Anschluss an ein ausgefallenes Listen-Before-Talk, LBT, für eines oder mehrere nicht lizensierten Teilbänder eine Kommunikation in einem nicht verfügbaren nicht lizensierten Teilband nicht zulässig ist.

12. Die Vorrichtung (300, 302₁-302ₙ) gemäß einem der vorhergehenden Ansprüche, wobei
die Vorrichtung (302₁-302ₙ) ein Nutzergerät, UE, aufweist, wobei das UE eines oder mehrere der Folgenden aufweist: ein bewegliches Endgerät oder ein stationäres Endgerät oder ein zellulares loT-UE oder ein Fahrzeug-UE oder ein Fahrzeug-Gruppenleiter-, GL-, UE oder eine loT-Vorrichtung oder eine Schmalband-loT-, NB-IoT-, Vorrichtung oder eine WiFi non Access Point STAtion, non-AP STA, oder ein Bodenfahrzeug oder ein Luftfahrzeug oder eine Drohne oder eine bewegliche Basisstation oder eine Straßenrandeinheit oder ein Gebäude oder einen sonstigen Gegenstand oder eine sonstige Vorrichtung, die oder der mit einer Netzwerkkonnektivität versehen ist, die es dem Gegenstand/der Vorrichtung ermöglicht, unter Verwendung des Drahtloskommunikationssystems zu kommunizieren, und/oder
die Vorrichtung (300) eine Basisstation, BS, aufweist, wobei die BS als eine bewegliche oder unbewegliche Basisstation implementiert ist und eines oder mehrere der Folgenden aufweist: eine Makrozellenbasisstation oder eine Kleinzellenbasisstation oder eine zentrale Einheit einer Basisstation oder eine verteilte Einheit einer Basisstation oder eine Straßenrandeinheit oder ein UE oder einen Gruppenleiter, GL, oder ein Relais oder ein Remote Radio Head oder eine AMF oder eine SMF oder eine Kernnetzwerkeinheit oder eine bewegliche Edge-Computing-Einheit oder ein Netzwerk-Slice wie in dem NR- oder 5G-Core-Kontext oder eine WLAN-AP-STA oder einen beliebigen Sende-/Empfangspunkt, TRP, der es einem Gegenstand oder einer Vorrichtung ermöglicht, unter Verwendung des Drahtloskommunikationsnetzwerks zu kommunizieren, wobei der Gegenstand oder die Vorrichtung mit einer Netzwerckonnektivität versehen ist, um unter Verwendung des Drahtloskommunikationsnetzwerks zu kommunizieren.

13. Ein Drahtloskommunikationssystem (100), das ein oder mehrere Nutzergeräte und eine oder mehrere Basisstationen aufweist, wobei eines oder mehrere der Nutzergeräte und/oder eine oder mehrere der Basisstationen eine Vorrichtung (300, 302₁-302ₙ) gemäß einem der vorhergehenden Ansprüche aufweisen.

14. Ein Verfahren zum Bereitstellen von Rückkopplungen in einem Drahtloskommunikationssystem (100), wobei das Verfahren folgende Schritte aufweist:
Empfangen, durch einen Empfänger, eines Transportblocks, TB, von einer oder mehreren Netzwerkeinheiten in dem Drahtloskommunikationssystem (100) unter Verwendung einer Mehrzahl von Frequenzbändern (SB1-SB4), wobei der TB in eine Mehrzahl von Codeblockgruppen, CBG, aufgeteilt ist, wobei jede CBG einen oder mehrere Codeblöcke, CB umfasst und auf eines der Mehrzahl von Frequenzbändern (SB1-SB4) begrenzt ist, und
Bereitstellen eines Rückkopplungen oder eines vorausgesagten Rückkopplungen für jede der CBG, welches eines oder mehrere aus Folgenden anzeigt: einen erfolgreichen Empfang der CBG, einen nicht erfolgreichen Empfang der CBG, keinen Bedarf an Redundanz für die CBG, einen Bedarf an einer gewissen Redundanz für die CBG und einen Betrag zusätzlich benötigter Redundanz,
**gekennzeichnet durch**
Komprimieren der Rückkopplungen und/oder der vorausgesagten Rückkopplungen für jede der CBG in eine komprimierte Rückkopplung, basierend auf einem Interferenzmuster auf einem oder mehreren der Frequenzbänder (SB1-SB4), welches an dem Empfänger erfasst wird, und
Senden des komprimierten Rückkopplungen an die eine oder die mehreren Netzwerkeinheiten.

15. Ein Computerprogrammprodukt, das Anweisungen aufweist, die bei Ausführung des Programms durch einen Computer bewirken, dass der Computer das Verfahren gemäß Anspruch 14 durchführt.

## Revendications

1. Appareil (300, 302₁-302ₙ) pour un système de communication sans fil (100),
dans lequel l'appareil (300, 302₁-302ₙ) est configuré pour utiliser une pluralité de bandes de fréquences (SB1 - SB4) pour une communication avec une ou plusieurs entités de réseau dans le système de communication sans fil (100),
dans lequel l'appareil (300, 302₁-302ₙ) est configuré pour recevoir, de l'une ou des plusieurs entités de réseau, un bloc de transport, TB, le TB étant divisé en une pluralité de groupes de blocs de code, CBG, chaque CBG incluant un ou plusieurs blocs de code, CB, et étant confiné à une de la pluralité de bandes de fréquences (SB1-SB4), et
dans lequel l'appareil (300, 302₁-302ₙ) doit fournir un retour d'information ou un retour d'information prédit pour chacun des CBG, indiquant une ou plusieurs d'une réception réussie du CBG, d'une réception non réussie du CBG, de l'absence de besoin de redondance pour le CBG, d'un besoin d'une certaine redondance pour le CBG et d'une quantité de redondance supplémentaire nécessaire, **caractérisé en ce que**
l'appareil (300, 302₁-302ₙ) est configuré pour compresser les retours d'information et/ou les retours d'information prédits pour chacun des CBG en un retour d'information compressé sur la base d'un motif d'interférence sur une ou plusieurs des bandes de fréquences (SB1-SB4) qui est détectée au niveau de l'appareil (300, 302₁-302ₙ) et à transmettre le retour d'information compressé à l'une ou les plusieurs entités du réseau.

2. Appareil (300, 302₁-302ₙ) selon la revendication 1, dans lequel, pour compresser les retours d'information et/ou les retours d'information prédits, l'appareil (300, 302₁-302ₙ) doit appliquer un schéma de compression sans perte ou un schéma de compression avec perte, ou une compression basée sur la bande de fréquences, ou une compression semi-avec perte.

3. Appareil (300, 302₁-302ₙ) selon l'une quelconque des revendications précédentes, dans lequel une réception réussie du CBG est indiquée par une première valeur, et une réception non réussie du CBG est indiquée par une deuxième valeur.

4. Appareil (300, 302₁-302ₙ) selon la revendication 3, dans lequel, pour compresser les retours d'information ou les retours d'information prédits, l'appareil (300, 302₁-302ₙ) doit appliquer un livre de codes à longueur variable, le livre de codes incluant des codes identifiant certains ou tous les motifs d'ACK et de NACK pour la pluralité de CBG, la longueur d'un code augmentant avec le nombre de NACK dans le cas où les ACK ont une probabilité plus élevée que les NACK, ou augmentant avec le nombre d'ACK dans le cas où les NACK ont une probabilité plus élevée que les ACK.

5. Appareil (300, 302₁-302ₙ) selon la revendication 3, dans lequel, pour compresser les retours d'information ou les retours d'information prédits, l'appareil (300, 302₁-302ₙ) doit représenter le retour d'information ou le retour d'information prédit pour chaque bande de fréquences (SB1-SB4) par une valeur unique, la valeur unique comprenant la première valeur dans le cas où tous les CBG dans une bande de fréquences (SB1-SB4) sont ou sont prédits pour être reçus avec succès, ou la deuxième valeur dans le cas où l'un des CBG d'une bande de fréquences (SB1-SB4) est ou est prédit pour ne pas être reçu avec succès.

6. Appareil (300, 302₁-302ₙ) selon la revendication 3, dans lequel, pour compresser les retours d'information ou les retours d'information prédits, l'appareil (300, 302₁-302ₙ) est configuré avec un certain nombre de valeurs de retour d'information pour transmettre les retours d'information ou les retours d'information prédits, le certain nombre de bits étant inférieur à un nombre maximal de CBG possibles dans le TB.

7. Appareil (300, 302₁-302ₙ) selon la revendication 6, dans lequel l'appareil (300, 302,-302ₙ) doit réorganiser un mappage des valeurs de retour d'information en utilisant un ensemble de règles prédéfini.

8. Appareil (300, 302₁-302ₙ) selon la revendication 6 ou 7, dans lequel
dans le cas où il y a un nombre suffisant de valeurs de retour d'information, l'appareil (300, 302₁-302ₙ) doit représenter le retour d'information ou le retour d'information prédit pour chaque CBG par une valeur unique, la valeur unique comprenant la première valeur dans le cas où le CBG est ou est prédit pour être reçus avec succès, ou la deuxième valeur si le CBG est ou est prédit pour ne pas être reçu avec succès, et
dans lequel, dans le cas où le nombre de valeurs de retour d'information est insuffisant, l'appareil (300, 302₁-302ₙ) doit représenter le retour d'information ou le retour d'information prédit pour chaque bande de fréquences (SB1-SB4) par une valeur unique, la valeur unique comprenant la première valeur dans le cas où tous les CBG dans une bande de fréquences (SB1-SB4) sont reçus avec succès, ou la deuxième valeur dans le cas où l'un des CBG d'une bande de fréquences (SB1-SB4) n'est pas reçu avec succès.

9. Appareil (300, 302₁-302ₙ) selon l'une quelconque des revendications 6 à 8, dans lequel
en cas d'une défaillance d'une ou plusieurs bandes de fréquences (SB1-SB4), l'appareil (300, 302₁-302ₙ) doit
- représenter le retour d'information ou le retour d'information prédit pour chaque bande de fréquences défaillante (SB1-SB4) par une valeur unique, la valeur unique indiquant que tous les CBG dans la bande de fréquences défaillante (SB1-SB4) ne sont pas reçus avec succès, ou
- représenter le retour d'information ou le retour d'information prédit pour chaque CBG dans l'une ou les bandes de fréquences défaillantes (SB1-SB4) par une valeur unique, la valeur unique indiquant que le CBG n'est pas reçu avec succès.

10. Appareil (300, 302₁-302ₙ) selon l'une quelconque des revendications 6 à 9, dans lequel
une défaillance d'une ou plusieurs des bandes de fréquences (SB1-SB4) est due à une interférence dans une bande de fréquences (SB1-SB4) dépassant un certain seuil ou à une autre condition de canal ne répondant pas à un certain critère, ou
une ou plusieurs ou la totalité de la pluralité de bandes de fréquences (SB1-SB4) sont des sous-bandes sans licence sur lesquelles une communication est autorisée pendant un certain temps de transmission, COT, en réponse à un Listen-Before-Talk, LBT, réussi et à une défaillance de l'une ou plusieurs des bandes de fréquences (SB1-SB4) est due à un LBT défaillant pour une ou plusieurs des sous-bandes sans licence.

11. Appareil (300, 302₁-302ₙ) selon l'une quelconque des revendications précédentes, dans lequel une ou plusieurs ou toutes les bandes de fréquences (SB1-SB4) sont des sous-bandes sans licence, et dans lequel
- à la suite d'un Listen-Before-Talk, LBT, réussi pour une ou plusieurs sous-bandes sans licence, une communication est autorisée pendant un certain temps de transmission dans une sous-bande sans licence disponible.
- à la suite d'un échec d'un Listen-Before-Talk, LBT, pour une ou plusieurs sous-bandes sans licence, une communication n'est pas autorisée dans une sous-bande sans licence non disponible.

12. Appareil (300, 302₁-302ₙ) selon l'une quelconque des revendications précédentes, dans lequel
l'appareil (302₁-302ₙ) comprend un dispositif utilisateur, UE, dans lequel l'UE comprend un ou plusieurs d'un terminal mobile, ou d'un terminal fixe, ou d'un UE IoT cellulaire, ou d'un UE embarqué ou d'un UE chef de groupe embarqué, GL, ou d'un appareil IoT, ou d'un appareil loT à bande étroite, NB-loT, ou d'une station WiFi non-point d'accès, non-AP STA, ou d'un véhicule terrestre, ou d'un véhicule aérien, ou d'un drone, ou d'une station de base mobile, ou d'une unité en bordure de route, ou d'un bâtiment, ou de tout autre élément ou appareil doté d'une connectivité réseau permettant à l'élément/appareil de communiquer en utilisant réseau de communication sans fil, et/ou
l'appareil (300) comprend une station de base, BS, dans lequel la BS est mise en œuvre sous forme d'une station de base mobile ou fixe et comprend une ou plusieurs d'une station de base à macrocellules, ou d'une station de base à petites cellules, ou d'une unité centrale d'une station de base, ou d'une unité distribuée d'une station de base, ou d'une unité en bordure de route, ou d'un UE ou d'un chef de groupe, GL, ou d'un relais, ou d'un tête radio distante, ou d'une AMF, ou d'une SMF, ou d'une entité du réseau central, ou d'une entité de calcul en périphérie mobile, ou d'une tranche de réseau comme dans le contexte du coeur de réseau NR ou 5G, ou d'un point d'accès WiFi, AP STA, ou de tout point de transmission/réception, TRP, permettant à un élément ou à un appareil de communiquer en utilisant le réseau de communication sans fil, l'élément ou l'appareil étant doté d'une connectivité réseau pour communiquer en utilisant le réseau de communication sans fil.

13. Système de communication sans fil (100), comprenant un ou plusieurs dispositifs utilisateur et une ou plusieurs stations de base, dans lequel un ou plusieurs des dispositifs d'utilisateur et/ou une ou plusieurs des stations de base comprennent un appareil (300, 302₁-302ₙ) selon l'une quelconque des revendications précédentes.

14. Procédé permettant de fournir un retour d'information dans un système de communication sans fil (100), le procédé comprenant le fait de :
recevoir, par un récepteur, en provenance d'une ou plusieurs entités du réseau dans le système de communication sans fil (100), un bloc de transport, TB, utilisant une pluralité de bandes de fréquences (SB1-SB4), le TB étant divisé en une pluralité de groupes de blocs de code, CBG, chaque CBG incluant un ou plusieurs blocs de code, CB, et étant confiné à l'une de la pluralité des bandes de fréquences (SB1-SB4), et
fournir un retour d'information ou un retour d'information prédit pour chacun des CBG, indiquant une ou plusieurs d'une réception réussie du CBG, d'une réception non réussie du CBG, de l'absence de besoin de redondance pour le CBG, d'un besoin d'une certaine redondance pour le CBG et une quantité de redondance supplémentaire nécessaire,
**caractérisé par**
compresser les retours d'information et/ou les retours d'information prédits pour chacun des CBG en un retour d'information compressé basé sur un motif d'interférence sur une ou plusieurs des bandes de fréquences (SB1-SB4) qui est détecté au niveau du récepteur, et
transmettre le retour d'information compressé à une ou plusieurs entités du réseau.

15. Produit de programme informatique comprenant des instructions qui, lorsque le programme est exécuté par un ordinateur, amène l'ordinateur à mettre en œuvre le procédé selon la revendication 14.
